(19) **Europäisches Patentamt**
**European Patent Office**
**Office européen des brevets**

(11) **EP 4 618 636 A1**

(12) **EUROPEAN PATENT APPLICATION**
published in accordance with Art. 153(4) EPC

(43) Date of publication:
**17.09.2025 Bulletin 2025/38**

(51) International Patent Classification (IPC):
*H04W 52/14* (2009.01)

(21) Application number: **23887900.1**

(52) Cooperative Patent Classification (CPC):
**H04L 1/00; H04L 5/00; H04W 52/14; H04W 52/18;
H04W 72/044**

(22) Date of filing: **01.11.2023**

(86) International application number:
**PCT/CN2023/129073**

(87) International publication number:
**WO 2024/099210 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022 CN 202211407914**

(71) Applicant: **Apogee Networks, LLC
Dallas, TX 75201 (US)**

(72) Inventors:
• **WU, Keying
Shanghai 201206 (CN)**
• **ZHANG, Xiaobo
Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS FOR WIRELESS COMMUNICATION**

(57)    Disclosed in the present application are a method and apparatus for wireless communication. The method comprises: a first node receiving first signaling; and sending a first signal, wherein the first signaling comprises a first domain; the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling. By means of the method, the flexibility of an uplink power control parameter group is ensured, such that the uplink transmission performance is ensured, and the signaling overhead is reduced.

FIG. 1

**Description**

**Technical Field**

The present application relates to a transmission method and apparatus for a wireless communication system, especially a transmission method and apparatus for wireless signals in a wireless communication system supporting a cellular network.

**Background Art**

A multi-antenna technology is a key technology in a 3GPP (3rd Generation Partner Project) LTE (Long-term Evolution) system and an NR (New Radio) system. An additional spatial degree of freedom is obtained by configuring a plurality of antennas at a communication node, such as a base station or UE (User Equipment). The plurality of antennas improve communication quality by beamforming to form a beam pointing to one specific direction. In LTE and NR systems, it is supported to configure the plurality of antennas at UE, and the reliability and/or throughput of an uplink transmission are improved by multi-antenna processing. The NR system supports codebook-based and non-codebook uplink multi-antenna transmission modes. The base station indicates precoding and/or an antenna port of the uplink transmission by indicating a TPMI (Transmitted Precoding Matrix Indicator) and/or an SRI (Sounding reference signal Resource Indicator). In the NR system, an uplink power control parameter, such as P0, alfa, a path loss reference signal identifier and a closed-loop power control index, depends on the SRI used for the uplink transmission. In NR R (release) 17, the number of antenna ports supported by uplink does not exceed 4.

**Summary of the Invention**

In NR R18, supporting for more uplink antenna ports and number of transmission layers is discussed. The applicant found through research that in this case, the current TPMI and SRI indications and uplink power control parameter determination modes need to be enhanced. In view of the above-mentioned problem, the present application discloses a solution. It should be explained that, although the above-mentioned description takes a cellular network and an uplink transmission as examples, the present application is also applicable to other scenarios such as a sidelink transmission and a downlink transmission, and achieves similar technical effects in the cellular network and the uplink transmission. In addition, the use of a unified solution for different scenarios (including but not limited to the cellular network, sidelink, the uplink transmission and the downlink transmission) also facilitates the reduction of hardware complexity and costs. In the absence of conflicts, the embodiments in a first node of the present application and the features in the embodiments can be applied to a second node, and vice versa. In the absence of conflicts, the embodiments of the present application and the features in the embodiments can be arbitrarily combined with each other.

As one embodiment, the interpretation of the terminologies in the present application refers to the definition of the 3GPP specification protocol TS36 series.

As one embodiment, the interpretation of the terminologies in the present application refers to the definition of the 3GPP standard protocol TS38 series.

As one embodiment, the interpretation of the terminologies in the present application refers to the definition of the 3GPP standard protocol TS37 series.

As one embodiment, the interpretation of the terminologies in the present application refers to the definition of the standard protocol of the IEEE (Institute of Electrical and Electronics Engineers).

The present application discloses a method for a wireless communication first node, comprising:

receiving first signaling, the first signaling comprising a first domain; and
sending a first signal,
wherein the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

As one embodiment, the benefit of the above-mentioned method comprises: the flexibility of an uplink power control parameter group is ensured, such that the uplink transmission performance is ensured

As one embodiment, the benefit of the above-mentioned method comprises: the signaling overhead is reduced.

According to one aspect of the present application, it is characterized in that an indication of the first domain in the first signaling depends on the first bit group in the first signaling.

According to one aspect of the present application, it is characterized by comprising:

receiving a first information block, the first information block being used for determining M first-type indexes and M power control parameter groups, and M being a positive integer greater than 1,

wherein the M first-type indexes and the M power control parameter groups are in one-to-one correspondence; a first index is one first-type index of the M first-type indexes, and the first power control parameter group is a power control parameter group corresponding to the first index among the M power control parameter groups; and the first domain in the first signaling and the first bit group in the first signaling are used for determining the first index.

According to one aspect of the present application, it is characterized by comprising:

receiving a second information block, the second information block being used for determining N first-type indexes, a first power control parameter group set, and a second power control parameter group set; and N being a positive integer greater than 1, and the first power control parameter group set and the second power control parameter group set respectively comprising at least one power control parameter group,

wherein any power control parameter group in the first power control parameter group set corresponds to one first-type index of the N first-type indexes, and any power control parameter group in the second power control parameter group set corresponds to one first-type index of the N first-type indexes; a second index is one first-type index of the N first-type indexes, and a value of the second index is equal to a value of the first domain in the first signaling; the first power control parameter group is a power control parameter group corresponding to the second index in a target power control parameter group set, and the target power control parameter group set is the first power control parameter group set or the second power control parameter group set; and whether the target power control parameter group set is the first power control parameter group set or the second power control parameter group set depends on the first bit group in the first signaling.

According to one aspect of the present application, it is characterized in that when and only when the first condition is satisfied, the first power control parameter group depends on the first bit group in the first signaling.

According to one aspect of the present application, it is characterized by comprising:

receiving a third information block, the third information block being used for determining a first time domain resource, and the first time domain resource comprising at least one symbol,

wherein the first condition comprises: a time domain resource in which the first signal is allocated is orthogonal to the first time domain resource.

According to one aspect of the present application, it is characterized in that the first node is user equipment.

According to one aspect of the present application, it is characterized in that the first node is a relay node.

The present application discloses a method for a second node used for wireless communication, comprising:

sending first signaling, the first signaling comprising a first domain; and

receiving a first signal,

wherein the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

According to one aspect of the present application, it is characterized in that an indication of the first domain in the first signaling depends on the first bit group in the first signaling.

According to one aspect of the present application, it is characterized by comprising:

sending a first information block, the first information block being used for determining M first-type indexes and M power control parameter groups, and M being a positive integer greater than 1,

wherein the M first-type indexes and the M power control parameter groups are in one-to-one correspondence; a first index is one first-type index of the M first-type indexes, and the first power control parameter group is a power control parameter group corresponding to the first index among the M power control parameter groups; and the first domain in the first signaling and the first bit group in the first signaling are used for determining the first index.

According to one aspect of the present application, it is characterized by comprising:

sending a second information block, the second information block being used for determining N first-type indexes, a first power control parameter group set, and a second power control parameter group set; and N being a positive integer greater than 1, and the first power control parameter group set and the second power control parameter group set respectively comprising at least one power control parameter group,

wherein any power control parameter group in the first power control parameter group set corresponds to one first-type index of the N first-type indexes, and any power control parameter group in the second power control parameter group set corresponds to one first-type index of the N first-type indexes; a second index is one first-type index of the N first-type indexes, and a value of the second index is equal to a value of the first domain in the first signaling; the first power control parameter group is a power control parameter group corresponding to the second index in a target power control parameter group set, and the target power control parameter group set is the first power control parameter group set or the second power control parameter group set; and whether the target power control parameter group set is the first power control parameter group set or the second power control parameter group set depends on the first bit group in the first signaling.

According to one aspect of the present application, it is characterized in that when and only when the first condition is satisfied, the first power control parameter group depends on the first bit group in the first signaling.

According to one aspect of the present application, it is characterized by comprising:

sending a third information block, the third information block being used for determining a first time domain resource, and the first time domain resource comprising at least one symbol,

wherein the first condition comprises: a time domain resource in which the first signal is allocated is orthogonal to the first time domain resource.

According to one aspect of the present application, it is characterized in that the second node is a base station.

According to one aspect of the present application, it is characterized in that the second node is user equipment.

According to one aspect of the present application, it is characterized in that the second node is a relay node.

The present application discloses a first node device used in wireless communication, comprising:

a first receiver for receiving first signaling, the first signaling comprising a first domain; and

a first transmitter for sending a first signal,

wherein the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

The present application discloses a second node device used in wireless communication, comprising:

a second transmitter for sending first signaling, the first signaling comprising a first domain; and

a second receiver for receiving a first signal,

wherein the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

As one embodiment, compared with a traditional solution, the present application has the following advantages:

the flexibility of an uplink power control parameter group is ensured, such that the uplink transmission performance is ensured; and

the signaling overhead is reduced.

**Brief Description of the Drawings**

Other features, purposes, and advantages of the present application will become more apparent by reading the detailed description of the non-limiting embodiments with reference to the following figures:

FIG. 1 shows a flow chart of first signaling and a first signal according to one embodiment of the present application;

FIG. 2 shows a schematic diagram of a network architecture according to one embodiment of the present application;

FIG. 3 shows a schematic diagram of an embodiment of radio protocol architectures for a user plane and a control plane according to one embodiment of the present application;

FIG. 4 shows a schematic diagram of a first communication device and a second communication device according to one embodiment of the present application;

FIG. 5 shows a schematic diagram of a flow of a transmission according to one embodiment of the present application;

FIG. 6 shows a schematic diagram of a first bit group in first signaling according to one embodiment of the present application;

FIG. 7 shows a schematic diagram in which a first power control parameter group is used for determining the sending power of a first signal according to one embodiment of the present application;

FIG. 8 shows a schematic diagram in which an indication of a first domain in first signaling depends on a first bit group in the first signaling according to one embodiment of the present application;

FIG. 9 shows a schematic diagram in which a first power control parameter group depends on a first bit group in first signaling according to one embodiment of the present application;

FIG. 10 shows a schematic diagram in which a first power control parameter group depends on a first bit group in first signaling according to one embodiment of the present application;

FIG. 11 shows a schematic diagram in which a first power control parameter group depends on a first bit group in first signaling according to one embodiment of the present application;

FIG. 12 shows a schematic diagram in which a first power control parameter group depends on a first bit group in first signaling according to one embodiment of the present application;

FIG. 13 shows a schematic diagram of a second information block according to one embodiment of the present application;

FIG. 14 shows a schematic diagram in which when and only when a first condition is satisfied, a first power control parameter group depends on a first bit group in first signaling according to one embodiment of the present application;

FIG. 15 shows a schematic diagram in which a third information block is used for determining a first time domain resource according to one embodiment of the present application;

FIG. 16 shows a structural block diagram of a processing device for a first node according to one embodiment of the present application; and

FIG. 17 shows a structural block diagram of a processing device used in a second node device according to one embodiment of the present application.

**Detailed Description of Embodiments**

The technical solution of the present application will be further described in detail below in conjunction with the accompanying drawings. It should be explained that in the absence of conflicts, the embodiments in the present application and the features in the embodiments can be arbitrarily combined with each other.

## Embodiment 1

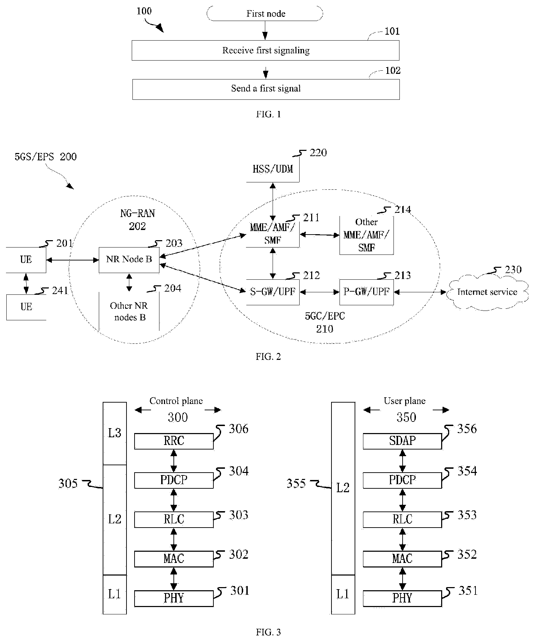

Embodiment 1 illustrates a flow chart of first signaling and a first signal according to one embodiment of the present application, as shown in FIG. 1. In 100 shown in FIG. 1, each block represents one step. In particular, the order of the steps in a block does not represent a specific temporal order relationship between among various steps.

In Embodiment 1, a first node in the present application receives first signaling in step 101; and sends a first signal in step 102, wherein the first signaling comprises a first domain; the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

As one embodiment, the first signaling comprises physical layer signaling.

As one embodiment, the first signaling comprises layer 1 (L1) signaling.

As one embodiment, the first signaling comprises DCI (Downlink Control Information).

As one embodiment, the first signaling comprises at least one DCI field.

As one embodiment, the first signaling is one DCI.

As one embodiment, the first signaling comprises RRC (Radio Resource Control) signaling.

As one embodiment, the first signaling is one piece of RRC signaling.

As one embodiment, the first signaling comprises all or parts of information in at least one RRC IE (Information Element).

As one embodiment, the first signaling is one RRC IE.

As one embodiment, the first signaling comprises an MAC CE (Medium Access Control layer Control Element).

As one embodiment, the first signaling is one MAC CE.

As one embodiment, the first signaling comprises the RRC signaling and the MAC CE.

As one embodiment, the first signaling comprises higher layer signaling and the DCI.

As one embodiment, the first signaling is UE-dedicated.

As one embodiment, a CRC (Cyclic Redundancy Check) of the first signaling is scrambled by a C (Cell)-RNTI (Radio Network Temporary Identifier).

As one embodiment, the first signaling is used for scheduling the first signal.

As one embodiment, the first signaling comprises scheduling information of the first signal, and the scheduling information comprises one or more of a time domain resource, a frequency domain resource, an MCS (Modulation and Coding Scheme), a DMRS (Demodulation Reference Signal) port, an HARQ (Hybrid Automatic Repeat Request) process number, an RV (Redundancy Version), an NDI (New Data Indicator), a TCI (Transmission Configuration Indicator) state, or an SRI (Sounding Reference Signal Resource Indicator).

As one embodiment, the first domain comprises at least one DCI field.

As one embodiment, the first domain is one DCI field.

As one embodiment, the first domain comprises information in a DCI field SRS resource indicator.

As one embodiment, the first domain is a DCI field SRS resource indicator.

As one embodiment, the first domain comprises information in a DCI field second SRS resource indicator.

As one embodiment, the first domain is a DCI field second SRS resource indicator.

As one embodiment, the first domain comprises information in at least one field in a DCI field SRS resource indicator and a DCI field second SRS resource indicator.

As one embodiment, the first domain comprises a DCI field SRS resource indicator and a DCI field second SRS resource indicator.

As one embodiment, the first domain comprises at least one field in the RRC IE.

As one embodiment, the first domain comprises at least one field in ConfiguredGrantConfig IE.

As one embodiment, the first domain is a srs-ResourceIndicator field in ConfiguredGrantConfig IE.

As one embodiment, the first domain is a srs-ResourceIndicator2 field in ConfiguredGrantConfig IE.

As one embodiment, the first domain comprises information in at least one of the srs-ResourceIndicator field and the srs-ResourceIndicator2 field in ConfiguredGrantConfig IE.

As one embodiment, the first domain comprises at least one bit.

As one embodiment, the bitwidth of the first domain in the first signaling is independent of the first bit group in the first signaling.

As one embodiment, the bitwidth of the first domain in the first signaling is configured by the RRC signaling.

As one embodiment, the bitwidth of the first domain means: the number of bits included in the first domain.

As one embodiment, the bitwidth of the first domain in the first signaling depends on the first layer number threshold value.

As one embodiment, the first layer number threshold value is configurable.

As one embodiment, the first layer number threshold value is configured by the RRC signaling.

As one embodiment, the first layer number threshold value is configured by the MAC CE.

As one embodiment, the first layer number threshold value is a positive integer greater than 4 and not greater than 8.

As one embodiment, the first layer number threshold value is fixed.

As one embodiment, the first layer number threshold value is fixed as 8.

As one embodiment, the number of codewords carried by the first signal is equal to 1 or 2.

As one embodiment, the number of codewords carried by the first signal is equal to 1.

As one embodiment, the number of codewords carried by the first signal is equal to 2.

As one embodiment, the codeword means: codeword.

As one embodiment, the MCS of the first signal comprises: the MCS of the at least one codeword carried by the first signal.

As one embodiment, the MCS of the first signal comprises: the MCS of each of the at least one codeword carried by the first signal.

As one embodiment, any codeword carried by the first signal corresponds to one TB (Transport Block).

As one embodiment, the number of codewords carried by the first signal is equal to the number of TBs carried by the first signal.

As one embodiment, the first signal only carries one codeword, and the one codeword is codeword 0.

As one embodiment, the first signal carries two codewords, and the two codewords are respectively codeword 0 and codeword 1.

As one embodiment, the first bit group comprises at least one bit.

As one embodiment, the first signaling comprises the DCI, and the first bit group comprises at least one DCI field in the first signaling.

As one embodiment, the first signaling comprises the RRC IE, and the first bit group comprises at least one field in the first signaling.

As one embodiment, the first bit group comprises the DCI field modulation and coding scheme and the DCI field redundancy version in the first signaling.

As one embodiment, the first bit group in the first signaling is used for determining the number of codewords carried by the first signal.

As one embodiment, the first bit group in the first signaling indicates the number of codewords carried by the first signal.

As one embodiment, the first bit group in the first signaling indicates that the first signal only carries one codeword, or indicates that the first signal carries two codewords.

As one embodiment, the first bit group in the first signaling indicates the number of codewords carried by the first signal.

As one embodiment, the first bit group in the first signaling implicitly indicates the number of codewords carried by the first signal by indicating other information.

As one embodiment, the first bit group comprises the DCI field modulation and coding scheme and DCI field redundancy version for TB 1 in the first signaling, and the DCI field modulation and coding scheme and the DCI field redundancy version for TB 2 in the first signaling.

As one embodiment, the first bit group in the first signaling indicates the MCS of the first signal.

As one embodiment, the first bit group in the first signaling indicates the MCS and the RV of the first signal.

As one embodiment, the first bit group in the first signaling indicates the MCS and the RV of the at least one codeword carried by the first signal.

As one embodiment, the first bit group in the first signaling indicates the MCS and the RV of each of the at least one codeword carried by the first signal.

As one embodiment, the first bit group in the first signaling is used for enabling one or two TBs.

As one embodiment, the first bit group in the first signaling indicates whether one TB or two TBs are enabled.

As one embodiment, the first bit group in the first signaling indicates that two TBs are both enabled, or the first bit group in the first signaling indicates that one TB is enabled and indicates that the other TB is disabled.

As one embodiment, the first bit group in the first signaling indicates whether TB 1 is enabled or disabled, and indicates whether TB 2 is enabled or disabled.

As one embodiment, when the first bit group in the first signaling indicates that both TB 1 and TB 2 are both enabled, the first signal carries two codewords; and when the first bit group in the first signaling indicates that only one of TB 1 and TB 2 is enabled, the first signal only carries one codeword.

As one embodiment, when the first bit group in the first signaling enables two TBs, the two TBs are respectively mapped to two codewords carried by the first signal; and when the first bit group in the first signaling only enables one TB, the one TB is mapped to one codeword carried by the first signal.

As one embodiment, when the first bit group in the first signaling enables two TBs, the two TBs are respectively mapped to codeword 0 and codeword 1.

As one embodiment, when the first bit group in the first signaling only enables one TB, the one TB is mapped to codeword 0.

As one embodiment, the first domain and the first bit group in the first signaling are used for determining a first signal layer number.

As one embodiment, the first signal layer number depends on the first domain and the first bit group in the first signaling.

As one embodiment, when the first bit group in the first signaling indicates that only one TB is enabled, the first signal layer number belongs to a first layer number range; when the first bit group in the first signaling indicates that two TBs are enabled, the first signal layer number belongs to a second layer number range; and the first layer number range and the second layer number range respectively comprise at least one layer number, and at least one layer number in the second layer number range is greater than a maximum layer number in the first layer number range.

As one embodiment, a minimum layer number in the second layer number range is greater than the maximum layer number in the first layer number range.

As one embodiment, the first layer number range and the second layer number range are respectively fixed.

As one embodiment, the first layer number range is {1, 2, 3, 4}, and the second layer number range is {5, 6, 7, 8}.

As one embodiment, when the first bit group in the first signaling indicates that only one TB is enabled, the first domain in the first signaling indicates the first signal layer number from the first layer number range; and when the first bit group in the first signaling indicates that two TBs are enabled, the first domain in the first signaling indicates the first signal layer number from the second layer number range.

As one embodiment, when the first bit group in the first signaling indicates that the first signal only carries one codeword, the first bit group in the first signaling indicates the MCS and the RV of the one codeword; and when the first bit group in the first signaling indicates that the first signal carries two codewords, the first bit group in the first signaling respectively indicates the MCS and the RV of the two codewords.

As one embodiment, the first signal includes a baseband signal.

As one embodiment, the first signal comprises a wireless signal.

As one embodiment, the first signal comprises a radio frequency signal.

As one embodiment, the first signal carries at least one TB (Transport Block).

As one embodiment, the first node is configured with a first higher layer parameter, and the first higher layer parameter indicates that a two-codeword transmission is enabled.

As one embodiment, the first higher layer parameter indicates that an uplink two-codeword transmission is enabled.

As one embodiment, the first higher layer parameter with which the first node is configured is set as 2.

As one embodiment, the first higher layer parameter with which the first node is configured is set to n2.

As one embodiment, the name of the first higher layer parameter comprises "maxNrofCodeWords".

As one embodiment, the name of the first higher layer parameter comprises "maxNrofCodeWordsScheduled-ByDCI".

As one embodiment, the first higher layer parameter is indicated by PUSCH-Config IE.

As one embodiment, the first higher layer parameter is indicated by BWP-UplinkDedicated IE.

As one embodiment, the first node is configured with a higher layer parameter "txConfig" set as "nonCodebook".

As one embodiment, the first node is configured with a higher layer parameter "txConfig" set as "nonCodebook" in PUSCH-Config IE.

As one embodiment, the first SRS resource group comprises at least one SRS resource.

As one embodiment, the first SRS resource group only comprises one SRS resource.

As one embodiment, the first SRS resource group comprises a plurality of SRS resources.

As one embodiment, each SRS resource in the first SRS resource group comprises one SRS port.

As one embodiment, each SRS resource in the first SRS resource group comprises one and only one SRS port.

As one embodiment, the first SRS resource group is a subset of the first SRS resource group; and the first SRS resource set comprises a plurality of SRS resources.

As one embodiment, the first SRS resource set is identified by one SRS-ResourceSetId.

As one embodiment, a higher layer parameter "usage" of the first SRS resource set is set as "nonCodebook".

As one embodiment, the first SRS resource set is configured by a higher layer parameter, and the name of the higher layer parameter comprises "srs-ResourceSetToAddModList".

As one embodiment, each SRS resource in the first SRS resource set comprises one SRS port.

As one embodiment, each SRS resource in the first SRS resource set comprises one and only one SRS port.

As one embodiment, any SRS resource in the first SRS resource group belongs to the first SRS resource group.

As one embodiment, any SRS resource in the first SRS resource set is identified by one SRS-ResourceId.

As one embodiment, the first domain in the first signaling indicates the first SRS resource group.

As one embodiment, the first domain in the first signaling indicates the first SRS resource group from the first SRS resource group.

As one embodiment, the bitwidth of the first domain in the first signaling depends on the number of SRS resources included in the first SRS resource set.

As one embodiment, the bitwidth of the first domain in the first signaling depends on the number of SRS resources included in the first SRS resource set and the first layer number threshold value.

As one embodiment, the bitwidth of the first domain in the first signaling is equal to a rounded-up integer of a 2-base logarithm of a first parameter; the first parameter is equal to

$$max\left(\sum_{k=1}^{\min(\text{Second layer number threshold value}, N_{SRS})}\binom{N_{SRS}}{k}, \sum_{k=\text{Second layer number threshold value}+1}^{\min(\text{First layer number threshold value}, N_{SRS})}\binom{N_{SRS}}{k}\right);$$

the second layer number threshold value and the first layer number threshold value are respectively positive integers; and the second layer number threshold value is not greater than the first layer number threshold value.

As one embodiment, the second layer number threshold value is smaller than the first layer number threshold value.

As one embodiment, the second layer number threshold value is configurable.

As one embodiment, the second layer number threshold value is fixed.

As one embodiment, the second layer number threshold value is fixed as 4.

As one embodiment, the meaning of the sentence that the first SRS resource group is used for determining an antenna port that sends the first signal comprises: the first signal is sent by the same antenna port as an SRS port of the first SRS resource group.

As one embodiment, the first SRS resource group comprises L SRS ports, the first signal comprises L layers, and L is a positive integer.

As one sub-embodiment of the above-mentioned embodiment, the first SRS resource group comprises L SRS resources, and the L SRS resources respectively comprise the L SRS ports.

As one sub-embodiment of the above-mentioned embodiment, the L layers are respectively transmitted by the same antenna ports as the L SRS ports.

As one sub-embodiment of the above-mentioned embodiment, the L layers are respectively transmitted by the L SRS ports.

As one sub-embodiment of the above-mentioned embodiment, the L layers are respectively mapped to the same antenna ports as the L SRS ports.

As one sub-embodiment of the above-mentioned embodiment, the L layers are respectively mapped to the L SRS ports.

As one sub-embodiment of the above-mentioned embodiment, the L layers are mapped to the same antenna ports as the L SRS ports after being precoded by a unit array.

As one sub-embodiment of the above-mentioned embodiment, the L layers are mapped to the L SRS ports after being precoded by a unit array.

As one embodiment, the first SRS resource group is used for determining a precoder of the first signal.

As one embodiment, the first signal and the SRS transmitted in the first SRS resource group use the same precoder.

As one embodiment, the first SRS resource group is used for determining a spatial domain transmission filter of the first signal.

As one embodiment, the first node uses the same spatial domain filter to send the first signal, and to send the SRS in the first SRS resource group.

As one embodiment, the first power control parameter group comprises one or more of $P_0$ for power control, alpha for power control, an indicator of a reference signal resource for measuring path loss, or a power control adjustment state index.

As one embodiment, the first power control parameter group comprises $P_0$ for power control, alpha for power control, an indicator of a reference signal resource for measuring path loss, and a power control adjustment state index.

As one embodiment, the first power control parameter group comprises $P_0$ for power control, alpha for power control, and a power control adjustment state index.

As one embodiment, the first power control parameter group comprises $P_0$ for power control and alpha for power control.

As one embodiment, the first power control parameter group comprises an indicator of a reference signal resource for measuring path loss.

As one embodiment, the reference signal resource for measuring path loss comprises a CSI-RS (Channel State Information Reference Signal) resource or an SSB (Synchronisation Signal/Physical Broadcast Channel Block) resource.

As one embodiment, the indicator of the reference signal resource for measuring path loss is NZP-CSI-RS-ResourceId or SSB-Index.

As one embodiment, the power control adjustment state index means: ClosedLoopIndex.

As one embodiment, the first domain in the first signaling and the first bit group in the first signaling are jointly used for determining the first power control parameter group.

As one embodiment, the first power control parameter group depends on the value of the first domain in the first signaling and the value of the first bit group in the first signaling.

As one embodiment, the meaning of the sentence "the first power control parameter group depends on the first domain in the first signaling and the first bit group in the first signaling" comprises: the first bit group in the first signaling indicates the number of codewords carried by the first signal, and the first power control parameter group depends on the first domain in the first signaling and the number of codewords carried by the first signal.

As one embodiment, the first domain in the first signaling and the number of codewords carried by the first signal are jointly used for determining the first power control parameter group.

As one embodiment, the interpretation of the first domain in the first signaling depends on the first bit group in the first signaling.

As one embodiment, the first domain in the first signaling indicates the first SRS resource group, and the indication of the first SRS resource group by the first domain in the first signaling depends on the first bit group in the first signaling.

As one embodiment, the indication of the first domain in the first signaling depends on the number of codewords carried by the first signal.

As one embodiment, the first signaling indicates a first SRI group from a third candidate SRI group pool, the first SRI group is used for determining the first SRS resource group, and the third candidate SRI group pool comprises at least one candidate SRI group; each candidate SRI group in the third candidate SRI group pool corresponds to one third type index, and the third type index is a non-negative integer; and the first SRI group is one of the third candidate SRI group with the corresponding third type index equal to a second integer, and the second integer depends on the first domain in the first signaling and the first bit group in the first signaling.

As one sub-embodiment of the above-mentioned embodiment, when the first bit group in the first signaling indicates that the first signal only carries one codeword, the second integer is equal to the value of the first domain in the first signaling.

As one sub-embodiment of the above-mentioned embodiment, when the first bit group in the first signaling indicates that the first signal carries two codewords, the second integer is equal to the value of the first domain in the first signaling plus a first offset, and the first offset is a positive integer.

As one sub-embodiment of the above-mentioned embodiment, when the first bit group in the first signaling indicates that the first signal carries two codewords, the second integer is equal to the value of the first domain in the first signaling modulo a first threshold value, and the first threshold is a positive integer.

As one embodiment, the first SRS resource group is a subset of the first SRS resource group; and The first SRS resource set is the first candidate SRS resource set or the second candidate SRS resource set, and whether the first SRS resource set is the first candidate SRS resource set or the second candidate SRS resource set depends on the first bit group in the first signaling; when the first bit group in the first signaling indicates that the first signal only carries one codeword, the first SRS resource set is the first candidate SRS resource set; and when the first bit group in the first signaling indicates that the first signal carries two codewords, the first SRS resource set is the second candidate SRS resource set.

As one sub-embodiment of the above-mentioned embodiment, the first domain in the first signaling indicates the first SRS resource group from the first SRS resource group.

As one sub-embodiment of the above-mentioned embodiment, the first candidate SRS resource set and the second candidate SRS resource set are respectively identified by two different SRS-ResourceSetIds.

As one sub-embodiment of the above-mentioned embodiment, the first candidate SRS resource set and the second candidate SRS resource set respectively comprise different SRS resources in the SRS resource set identified by the same one SRS-ResourceSetId.

As one sub-embodiment of the above-mentioned embodiment, there is no common SRS resource in the first candidate SRS resource set and the second candidate SRS resource set.

As one sub-embodiment of the above-mentioned embodiment, there is at least one common SRS resource in the first candidate SRS resource set and the second candidate SRS resource set.

## Embodiment 2

Embodiment 2 illustrates a schematic diagram of a network architecture according to one embodiment of the present application, as shown in FIG. 2.

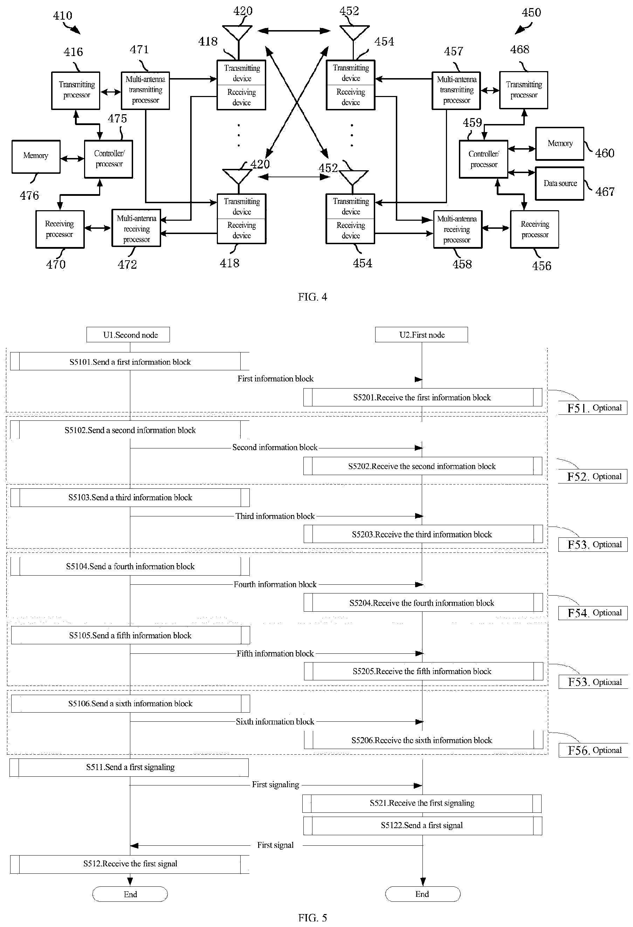

FIG. 2 illustrates a network architecture 200 of LTE (Long-Term Evolution), LTE-A (Long-Term Evolution Advanced) and future 5G systems. The network architecture 200 of LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable terms. The 5GS/EPS 200 may comprise one or more pieces of UE (User Equipment) 201, one piece of UE241 communicating with the UE201 via a sidelink, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. 5GS/EPS200 can be interconnected with other access networks, but for simplicity, these entities/interfaces are not shown. As shown in FIG. 2, 5GS/EPS200 provides a packet switching service, but those skilled the art will easily understand that the various concepts presented throughout the present application can be extended to a network that provides a circuit switching service. NG-RAN202 comprises an NR (New Radio) node B (gNB) 203 and other gNB204. The gNB203 provides user and control plane protocol terminations toward the UE201. The gNB203 may be connected to the other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (transmission reception point), or some other suitable terms. The gNB203 provides an access point to 5GC/EPC210 for UE201. Examples of UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similar functional apparatus. Those skilled in the art may also call the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms. The gNB203 is connected to 5GC/EPC210 by an S1/NG interface. 5GC/EPC210 comprises an MME (Mobility Management Entity)/AMF (Authentication Management Field)/SMF (Session Management Function) 211, other MME/AMF/SMF214, S-GW (Service Gateway)/UPF (User Plane Function) 212, and a P-GW (Packet Data Network Gateway)/UPF213. The MME/AMF/SMF211 is a control node that processes signaling between UE201 and 5GC/EPC210. Generally, the MME/AMF/SMF211 provides bearer and connection management. All user IP (Internet Protocol) packets are communicated by the S-GW/UPF212, and the S-GW/UPF212 is itself connected to P-GW/UPF213. The P-GW provides UE IP address allocation and other functions. The P-GW/UPF213 is connected to the Internet service 230. The Internet service 230 comprises an Internet protocol service corresponding to an operator, which may specifically comprise the Internet, the intranet, an IMS (IP Multimedia Subsystem), and a packet switching service.

As one embodiment, the first node in the present application comprises the UE201.

As one embodiment, the second node in the present application comprises the gNB203.

As one embodiment, a wireless link between the UE201 and the gNB203 comprises a cellular network link.

As one embodiment, a sender of the first signaling comprises the gNB203.

As one embodiment, a recipient of the first signaling comprises the UE201.

As one embodiment, a sender of the first signal comprises the UE201.

As one embodiment, a recipient of the first signal comprises the gNB203.

As one embodiment, the gNB203 supports an uplink transmission by 8 transmitting antennas.

As one embodiment, the UE201 supports an uplink transmission by 8 transmitting antennas.

As one embodiment, the UE201 supports an uplink two-codeword transmission.

## Embodiment 3

Embodiment 3 illustrates a schematic diagram of an embodiment of radio protocol architectures for a user plane and a control plane according to one embodiment of the present application, as shown in FIG. 3.

Embodiment 3 shows a schematic diagram of an embodiment of radio protocol architectures for one user plane and one control plane according to the present application, as shown in FIG. 3. FIG. 3 is a schematic diagram illustrating an embodiment of radio protocol architectures for a user plane 350 and a control plane 300, and FIG. 3 exhibits the radio protocol architecture for the control plane 300 between a first communication node device (UE, gNB, or RSU in V2X) and a second communication node device (gNB, UE, or RSU in V2X) or between two pieces of UE by using three layers: layer 1, layer 2, and layer 3. The layer 1 (L1 layer) is the lowest layer and implements various PHY (physical layer) signal processing functions. The L1 layer will be herein referred to as PHY301. The layer 2 (L2 layer) 305 is above PHY301 and is responsible for the link between the first communication node device and the second communication node device or between two pieces of UE. The L2 layer 305 comprises a MAC (Medium Access Control) sub-layer 302, an RLC (Radio Link Control) sub-layer 303, and a PDCP (Packet Data Convergence Protocol) sub-layer 304, which terminate at the second communication node device. The PDCP sub-layer 304 provides multiplexing between different radio bearer and logical channels. The PDCP sub-layer 304 also provides security by encrypting data packets, and provides zone-crossing mobility support between the second communication node devices for the first communication node device. The RLC sub-layer 303 provides segmentation and reassembly of upper-layer data packets, retransmission of lost data packets, and reordering of data packets to compensate for unordered reception caused by HARQ. The MAC sub-layer 302 provides multiplexing between logical and transmission channels. The MAC sub-layer 302 is also responsible for allocating, between the first communication node devices, various radio resources (for example, resource blocks) in one cell. The MAC sub-layer 302 is also responsible for HARQ operations. The RRC (Radio Resource Control) sub-layer 306 in the layer 3 (L3 layer) in the control plane 300 is responsible for obtaining radio resources (i.e., radio bearers) and configuring a lower layer by using the RRC signaling between the second communication node device and the first communication node device. The radio protocol architecture for the user plane 350 comprises a layer 1 (L1 layer) and a layer 2 (L2 layer). The radio protocol architecture for the first communication node device and the second communication node device in the user plane 350 for the physical layer 351, the PDCP sub-layer 354 in the L2 layer 355, the RLC sub-layer 353 in the L2 layer 355, and the MAC sub-layer 352 in the L2 layer 355 is substantially the same as that in the control plane 300 for the corresponding layers and sub-layers, but the PDCP sub-layer 354 also provides header compression for upper-layer data packets to reduce radio transmission overhead. The L2 layer 355 in the user plane 350 further comprises an SDAP (Service Data Adaptation Protocol) sub-layer 356, and the SDAP sub-layer 356 is responsible for mapping between a QoS stream and a data radio bearer (DRB) to support the diversity of services. Although not shown, the first communication node device may have several upper layers above the L2 layer 355, comprising a network layer (for example, an IP layer) terminated at P-GW on the network side and an application layer terminated at the connected other end (for example, remote UE, a server, etc.).

As one embodiment, the radio protocol architecture in FIG. 3 is applicable to the first node in the present application.

As one embodiment, the radio protocol architecture in FIG. 3 is applicable to the second node in the present application.

As one embodiment, the first signaling is generated in the MAC sub-layer 302 or the MAC sub-layer 352.

As one embodiment, the first signaling is generated in the PHY301 or the PHY351.

As one embodiment, the first signal is generated in the PHY301 or the PHY351.

As one embodiment, the higher layer in the present application means a layer above the physical layer.

## Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

A first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

A second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

In a transmission from the first communication device 410 to the second communication device 450, at the first communication device 410, an upper-layer data packet from a core network is provided to the controller/processor 475. The controller/processor 475 implements the functionality of the L2 layer. In DL, the controller/processor 475 provides header compression, encryption, packet segmentation and reordering, multiplexing between logical and transmission channels, and radio resource allocation to the second communication device 450 based on various priority metrics. The controller/processor 475 is also responsible for an HARQ operation and retransmission of a lost packet, and for signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, as well as mapping of constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding comprising codebook-based precoding and non-codebook-based precoding, and beamforming processing on the coded and modulated symbols to generate one or more parallel streams. The transmitting processor 416 then maps each parallel stream to a subcarrier, the modulated symbol is multiplexed with a reference signal (for example, a pilot frequency) in the time domain and/or frequency domain, and subsequently an inverse fast Fourier transform (IFFT) is used to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the first communication device 410 to the second communication device 450, at the second communication device 450, each receiving device 454 receives a signal by a corresponding antenna 452 thereof. Each receiving device 454 recovers the information modulated onto the RF carrier and converts the RF stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal is subjected to multi-antenna detection in the multi-antenna receiving processor 458 to recover any parallel stream with the second communication device 450 as the destination. The symbols on each parallel stream are demodulated and recovered in the receiving processor 456, and a soft decision is generated. Subsequently, the receiving processor 456 decodes and deinterleaves the soft decision to recover the upper-layer data and a control signal transmitted by the first communication device 410 on the physical channel. Subsequently, the upper-layer data and the control signal are provided to the controller/processor 459. The controller/processor 459 implements the functions of the L2 layer. The controller/processor 459 may be associated with a memory 460 storing program codes and data. The memory 460 may be referred to as a computer-readable medium. In the DL, the controller/processor 459 provides demultiplexing between transmission and logical channels, packet reassembly, decryption, header decompression, and control signal processing to recover the upper-layer data packet from the core network. Subsequently, the upper-layer data packet is provided to all protocol layers above the L2 layer. Various control signals may also be provided to an L3 for L3 processing. The controller/processor 459 is also responsible for performing error detection by using an acknowledgement (ACK) and/or negative acknowledgement (NACK) protocol to support HARQ operations.

In a transmission from the second communication device 450 to the first communication device 410, at the second communication device 450, a data source 467 is used for providing the upper-layer data packet to the controller/processor 459. The data source 467 represents all protocol layers above the L2 layer. Similar to the sending function at the first communication device 410 described in DL, the controller/processor 459 implements header compression, encryption, packet segmentation and reordering, and multiplexing between logical and transmission channels based on wireless resource allocation of the first communication device 410, and implements L2 layer functions for the user plane and the control plane. The controller/processor 459 is also responsible for HARQ operations, retransmission of lost packets, and for signaling to the first communication device 410. The transmitting processor 468 performs modulation mapping and channel coding processing, and the multi-antenna transmitting processor 457 performs digital multi-antenna spatial precoding comprising codebook-based precoding and non-codebook-based precoding, and beamforming processing. Subsequently, the transmitting processor 468 modulates the generated parallel stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the second communication device 450 to the first communication device 410, the function at the first communication device 410 is similar to the receiving function at the second communication device 450 described in the transmission from the first communication device 410 to the second communication device 450. Each receiving device 418 receives a radio frequency signal by a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/-processor 475 may be associated with a memory 476 storing program codes and data. The memory 476 may be referred to as a computer-readable medium. The controller/processor 475 provides demultiplexing between transmission and logical channels, packet reassembly, decryption, header decompression, and control signal processing to recover the upper-layer data packet from the second communication device 450. The upper-layer data packet from the controller/processor 475 can be provided to the core network. The controller/processor 475 is also responsible for performing error detection by using an ACK and/or NACK protocol to support HARQ operations.

As one embodiment, the second communication device 450 comprises: at least one processor and at least one memory, wherein the at least one memory comprises a computer program code; and the at least one memory and the computer program code are configured to be used with the at least one processor. The second communication device 450 apparatus at least receives the first signaling; and sends the first signal. The first signaling comprises a first domain; the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

As one embodiment, the second communication device 450 comprises: a memory storing a computer-readable instruction program, wherein the computer-readable instruction program generates actions when executed by at least one processor, and the actions comprise: receiving the first signaling; and sends the first signal.

As one embodiment, the first communication device 410 comprises: at least one processor and at least one memory, wherein the at least one memory comprises a computer program code; and the at least one memory and the computer program code are configured to be used with the at least one processor. The first communication device 410 apparatus at least sends the first signaling; and receives the first signal. The first signaling comprises a first domain; the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

As one embodiment, the first communication device 410 comprises: a memory storing a computer-readable instruction program, wherein the computer-readable instruction program generates actions when executed by at least one processor, and the actions comprise: sending the first signaling; and receiving the first signal.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first signaling; and at least one of {the antenna 420, the transmitting device 418, the transmitting processor 416, the multi-antenna transmitting processor 471, the controller/processor 475, and the memory 476} is used for sending the first signaling.

As one embodiment, at least one of {the antenna 420, the receiving device 418, the receiving processor 470, the multi-antenna receiving processor 472, the controller/processor 475, and the memory 476} is used for receiving the first signal; and at least one of {the antenna 452, the transmitting device 454, the transmitting processor 468, the multi-antenna transmitting processor 457, the controller/processor 459, the memory 460, and the data source 467} is used for sending the first signal.

As one embodiment, at least one of {the antenna 452, the receiving device 454, the receiving processor 456, the multi-antenna receiving processor 458, the controller/processor 459, the memory 460, and the data source 467} is used for receiving a first information block; and at least one of {the antenna 420, the transmitting device 418, the transmitting processor 416, the multi-antenna transmitting processor 471, the controller/processor 475, and the memory 476} is used for sending the first information block.

As one embodiment, at least one of {the antenna 452, the receiving device 454, the receiving processor 456, the multi-antenna receiving processor 458, the controller/processor 459, the memory 460, and the data source 467} is used for receiving a second information block; and at least one of {the antenna 420, the transmitting device 418, the transmitting processor 416, the multi-antenna transmitting processor 471, the controller/processor 475, and the memory 476} is used for sending the second information block.

As one embodiment, at least one of {the antenna 452, the receiving device 454, the receiving processor 456, the multi-antenna receiving processor 458, the controller/processor 459, the memory 460, and the data source 467} is used for receiving a third information block; and at least one of {the antenna 420, the transmitting device 418, the transmitting processor 416, the multi-antenna transmitting processor 471, the controller/processor 475, and the memory 476} is used for sending the third information block.

## Embodiment 5

Embodiment 5 illustrates a flow chart of a transmission according to one embodiment of the present application, as shown in FIG. 5. In FIG. 5, a second node U1 and a first node U2 are communication nodes for transmissions by an air interface. In FIG. 5, the steps in blocks F51 to F56 are respectively optional.

For the second node U1, a first information block is sent in step S5101; a second information block is sent in step S5102; a third information block is sent in step S5103; a fourth information block is sent in step S5104; a fifth information block is sent in step S5105; a sixth information block is sent in step S5106; the first signaling is sent in step S511; a first signal is received in step S512.

For the first node U2, the first information block is received in step S5201; the second information block is received in step S5202; the third information block is received in step S5203; the fourth information block is received in step S5204; the fifth information block is received in step S5205; the sixth information block is received in step S5206; the first signaling is received in step S521; and the first signal is sent in step S522.

In Embodiment 5, the first signaling comprises a first domain; the first domain in the first signaling is used by the first node U2 for determining a first SRS resource group, and the first SRS resource group is used by the first node U2 for determining an antenna port that sends the first signal; a first power control parameter group is used by the first node U2 for determining the sending power of the first signal; the first signal carries at least one codeword; the first signaling comprises a first bit group, and the first bit group in the first signaling is used by the first node U2 for determining the MCS of the first signal; and the first power control parameter group depends on the first domain in the first signaling and the first bit group in the first signaling.

As one embodiment, the first node U2 is the first node in the present application.

As one embodiment, the second node U1 is the second node in the present application.

As one embodiment, an air interface between the second node U1 and the first node U2 comprises a wireless interface between a base station device and user equipment.

As one embodiment, an air interface between the second node U1 and the first node U2 comprises a wireless interface between a relay node device and user equipment.

As one embodiment, an air interface between the second node U1 and the first node U2 comprises a wireless interface between user equipment and user equipment.

As one embodiment, the second node U1 is a serving cell maintaining base station of the first node U2.

As one embodiment, the first signaling is transmitted in a PDSCH (Physical Downlink Shared Channel).

As one embodiment, the first signaling is transmitted in a PDCCH (Physical Downlink Control Channel).

As one embodiment, the first signal is transmitted in a PUSCH (Physical Uplink Shared CHannel).

As one embodiment, the step in the block F51 in FIG. 5 exists, the first information block is used by the first node U2 for determining M first-type indexes and M power control parameter groups, and M is a positive integer greater than 1; the M first-type indexes and the M power control parameter groups are in one-to-one correspondence; a first index is one first-type index of the M first-type indexes, and the first power control parameter group is a power control parameter group corresponding to the first index among the M power control parameter groups; and the first domain in the first signaling and the first bit group in the first signaling are used by the first node U2 for determining the first index.

As one embodiment, the first information block is carried by higher layer signaling.

As one embodiment, the first information block is carried by RRC signaling.

As one embodiment, the first information block comprises information in all or parts of fields in one RRC IE.

As one embodiment, the first information block comprises information in all or parts of fields in each of a plurality of RRC IEs.

As one embodiment, the first information block comprises information in all or parts of fields in PUSCH-PowerControl IE.

As one embodiment, the first information block comprises information in the sri-PUSCH-MappingToAddModList field in PUSCH-PowerControl IE.

As one embodiment, the first information block is carried by PUSCH-PowerControl IE.

As one embodiment, the first information block is carried by the sri-PUSCH-MappingToAddModList field in PUSCH-PowerControl IE.

As one embodiment, the first information block comprises information in SRI-PUSCH-PowerControl.

As one embodiment, the first information block comprises information in all or parts of fields in PUSCH-Config IE.

As one embodiment, the first information block comprises information in all or parts of fields in BWP-UplinkDedicated IE.

As one embodiment, the first information block comprises information in all or parts of fields in ServingCellConfig IE.

As one embodiment, the first information block is carried by MAC CE.

As one embodiment, the first information block comprises a MAC CE.

As one embodiment, the first information block is carried by a DCI.

As one embodiment, the first information block comprises DCI.

As one embodiment, the first information block comprises information in one or more fields in one DCI.

As one embodiment, the first information block is carried by the RRC signaling and the MAC CE.

As one embodiment, the first information block is carried by higher layer signaling and the DCI.

As one embodiment, the first information block indicates the M first-type indexes.

As one embodiment, the first information block indicates the M power control parameter groups.

As one embodiment, the first information block indicates a correspondence relationship between the M first-type indexes and the M power control parameter groups.

As one embodiment, the first information block is used for configuring a mapping relationship between the M first-type indexes and the M power control parameter groups.

As one embodiment, the first information block is transmitted in the PDSCH.

As one embodiment, the step in the block F52 in FIG. 5 exists, the second information block is used by the first node U2 for determining N first-type indexes, a first power control parameter group set, and a second power control parameter group set, N is a positive integer greater than 1, and the first power control parameter group set and the second power control parameter group set respectively comprise at least one power control parameter group; any power control parameter group in the first power control parameter group set corresponds to one first-type index of the N first-type indexes, and any power control parameter group in the second power control parameter group set corresponds to one first-type index of the N first-type indexes; a second index is one first-type index of the N first-type indexes, and a value of the second index is equal to a value of the first domain in the first signaling; the first power control parameter group is a power control parameter group corresponding to the second index in a target power control parameter group set, and the target power control parameter group set is the first power control parameter group set or the second power control parameter group set; and whether the target power control parameter group set is the first power control parameter group set or the second power control parameter group set depends on the first bit group in the first signaling.

As one embodiment, the second information block is carried by higher layer signaling.

As one embodiment, the second information block is carried by RRC signaling.

As one embodiment, the second information block comprises information in all or parts of fields in one RRC IE.

As one embodiment, the second information block comprises information in all or parts of fields in each of a plurality of RRC IEs.

As one embodiment, the second information block comprises information in all or parts of fields in PUSCH-PowerControl IE.

As one embodiment, the second information block comprises information in the sri-PUSCH-MappingToAddMod-List field in PUSCH-PowerControl IE.

As one embodiment, the second information block is carried by PUSCH-PowerControl IE.

As one embodiment, the second information block is carried by the sri-PUSCH-MappingToAddModList field in PUSCH-PowerControl IE.

As one embodiment, the second information block comprises information in SRI-PUSCH-PowerControl.

As one embodiment, the second information block comprises information in all or parts of fields in PUSCH-Config IE.

As one embodiment, the second information block comprises information in all or parts of fields in BWP-UplinkDedicated IE.

As one embodiment, the second information block comprises information in all or parts of fields in ServingCell-Config IE.

As one embodiment, the second information block is carried by the MAC CE.

As one embodiment, the second information block comprises the MAC CE.

As one embodiment, the second information block is carried by the DCI.

As one embodiment, the second information block comprises the DCI.

As one embodiment, the second information block comprises information in one or more fields in one DCI.

As one embodiment, the second information block is carried by the RRC signaling and the MAC CE.

As one embodiment, the second information block is carried by the higher layer signaling and the DCI.

As one embodiment, the second information block indicates the N first-type indexes.

As one embodiment, the second information block indicates the first power control parameter group set.

As one embodiment, the second information block indicates the second power control parameter group set.

As one embodiment, the second information block indicates a correspondence relationship between the N first-type indexes and the power control parameter groups in the first power control parameter group set, and indicates a correspondence relationship between the N first-type indexes and the power control parameter groups in the second power control parameter group set.

As one embodiment, the second information block is used for configuring a mapping relationship between the N first-type indexes and the power control parameter groups in the first power control parameter group set, and is used for configuring a mapping relationship between the N first-type indexes and the power control parameter groups in the second power control parameter group set.

As one embodiment, the second information block is transmitted in the PDSCH.

As one embodiment, the step in the block F53 in FIG. 5 exists, and the third information block is used by the first node U2 for determining the first time domain resource, and the first time domain resource comprises at least one symbol.

As one embodiment, the third information block is carried by the higher layer signaling.

As one embodiment, the third information block is carried by the RRC signaling.

As one embodiment, the third information block comprises information in all or parts of fields in one RRC IE.

As one embodiment, the third information block comprises information in all or parts of the fields in each of a plurality of RRC IEs.

As one embodiment, the third information block comprises information in all or parts of fields in TDD-UL-DL-ConfigCommon IE.

As one embodiment, the third information block comprises information in all or parts of fields in TDD-UL-DL-ConfigDedicated IE.

As one embodiment, the third information block comprises information in all or parts of fields in ServingCellConfig IE.

As one embodiment, the third information block comprises information in all or parts of fields in ServingCell-ConfigCommonSIB IE.

As one embodiment, the third information block comprises information in all or parts of fields in ServingCell-ConfigCommon IE.

As one embodiment, the third information block is carried by the MAC CE.

As one embodiment, the third information block is carried by the DCI.

As one embodiment, the third information block comprises information in one or more fields in one DCI.

As one embodiment, the third information block is carried by DCI format 2_0.

As one embodiment, the third information block is carried by the RRC signaling and the MAC CE.

As one embodiment, the third information block is carried by the higher layer signaling and the DCI.

As one embodiment, the third information block is transmitted in the PDSCH.

As one embodiment, the step in the block F55 in FIG. 5 exists, and the method for a first node for wireless communication comprises:

receiving a fourth information block,
wherein the fourth information block indicates Q candidate power control parameter groups, and Q is a positive integer greater than 1; the first power control parameter group is one of the Q candidate power control parameter groups, or the first power control parameter group comprises a first power control parameter subgroup, and the first power control parameter subgroup is one of the Q candidate power control parameter groups.

As one embodiment, the fourth information block is transmitted in the PDSCH.

As one embodiment, the step in the block F55 in FIG. 5 exists, and the method for a first node for wireless communication comprises:

receiving a fifth information block,
wherein, the fifth information block is used by the first node U2 for determining N1 first-type indexes, N2 first-type indexes, N1 power control parameter groups and N2 power control parameter groups; the N1 first-type indexes and the N1 power control parameter groups are in one-to-one correspondence, and the N2 first-type indexes and the N2 power control parameter groups are in one-to-one correspondence; N1 and N2 are respectively positive integers greater than 1; the first domain in the first signaling is used for determining a first integer, a fourth index is one of the K first-type indexes, and a value of the fourth index is equal to the first integer; the first power control parameter group is a power control parameter group corresponding to the fourth index in the K power control parameter groups; K is equal to N1 and the K power control parameter groups are the N1 power control parameter groups and the K first-type indexes are the N1 first-type indexes, or K is equal to the N2 and the K power control parameter groups are the N2 power control parameter groups and the K first-type indexes are the N2 first-type indexes; and whether the K power control parameter groups are the N1 power control parameter groups or the N2 power control parameter groups depends on the first bit group in the first signaling.

As one embodiment, the step in block F55 in FIG. 5 exists, and the method for a second node for wireless communication comprises:
sending a fifth information block.

As one embodiment, the fifth information block is transmitted in the PDSCH.

As one embodiment, the step in the block F56 in FIG. 5 exists, and the method for a first node for wireless communication comprises:

receiving a sixth information block,
wherein the sixth information block is used by the first node U2 for determining N3 power control parameter groups and N4 first-type indexes, the first power control parameter group is one of the N3 power control parameter groups, any first-type index in the N4 first-type indexes corresponds to one of the N3 power control parameter groups, and N3 and N4 are respectively positive integers greater than 1; there are at least two first-type indexes in the N4 first-type indexes, corresponding to the same one of the N3 power control parameter groups; and the third index is one of the N4 first-type indexes, the first domain and the first bit group in the first signaling are jointly used for determining the third index from the N4 first-type indexes, and the first power control parameter group is one of the N3 power control parameter groups corresponding to the third index.

As one embodiment, the step in block F56 in FIG. 5 exists, and the method for a second node for wireless communication comprises:
sending a sixth information block.

As one embodiment, the sixth information block is transmitted in the PDSCH.

As one embodiment, the steps in any two of the blocks F51, F52, F55 and F56 in FIG. 5 cannot exist at the same time.

As one embodiment, the steps in only one of the blocks F51, F52, F55 and F56 in FIG. 5 exist.

Embodiment 6

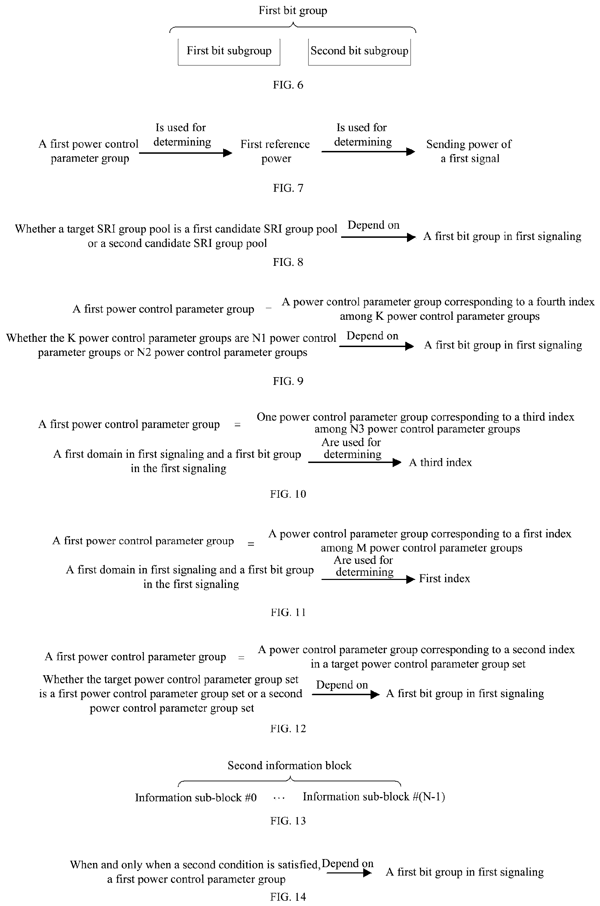

Embodiment 6 illustrates a schematic diagram of a first bit group in first signaling according to one embodiment of the present application, as shown in FIG. 6. In Embodiment 6, the first bit group comprises a first bit subgroup and a second bit subgroup; and the first bit subgroup and the second bit subgroup respectively comprise at least one DCI field in the first signaling.

As one embodiment, the position of the first bit subgroup in the first signaling is before the second bit subgroup.

As one embodiment, at least one of the first bit subgroup and the second bit subgroup in the first signaling indicates MCS and RV of the first signal.

As one embodiment, the first bit subgroup and the second bit subgroup in the first signaling are jointly used for indicating the number of codewords carried by the first signal.

As one embodiment, the first bit subgroup in the first signaling indicates that TB 1 is enabled or disabled; and the second bit subgroup in the first signaling indicates that TB 2 is enabled or disabled.

As one embodiment, at least one of TB 1 and TB 2 is enabled.

As one embodiment, the first bit subgroup comprises a second domain and a third domain in the first signaling; when a value of the second domain in the first signaling is equal to a first given numerical value and a value of the third domain in the first signaling is equal to a second given value, TB 1 is disabled; and the first given numerical value and the second given numerical value are respectively positive integers.

As one sub-embodiment of the above-mentioned embodiment, when the value of the second domain in the first signaling is not equal to the first given numerical value, or the value of the third domain in the first signaling is not equal to the second given numerical value, TB 1 is enabled.

As one embodiment, the second bit subgroup comprises a fourth domain and the fifth domain in the first signaling, and when a value of the fourth domain in the first signaling is equal to the first given numerical value and a value of the fifth domain in the first signaling is equal to the second given numerical value, TB 2 is disabled; and the first given numerical value and the second given numerical value are respectively positive integers.

As one sub-embodiment of the above-mentioned embodiment, when the value of the fourth domain in the first signaling is not equal to the first given numerical value, or the value of the fifth domain in the first signaling is not equal to the second given numerical value, TB 2 is enabled.

As one embodiment, the second domain is a DCI field modulation and coding scheme for TB 1, and the third domain is a DCI field redundancy version for TB 1.

As one embodiment, the fourth domain is a DCI field modulation and coding scheme for TB 2, and the fifth domain is a DCI field redundancy version for TB 2.

As one embodiment, the first given numerical value is not greater than 32, and the second given numerical value is not greater than 4.

As one embodiment, the first given numerical value is equal to 26, and the second given numerical value is equal to 1.

As one embodiment, when TB 1 is enabled, the first bit subgroup shown indicates the MCS and RV of the TB 1.

As one embodiment, when TB 2 is enabled, the second bit subgroup shown indicates the MCS and RV of the TB 2.

**Embodiment 7**

Embodiment 7 illustrates a schematic diagram in which a first power control parameter group is used for determining the sending power of a first signal according to one embodiment of the present application, as shown in FIG. 7. In Embodiment 7, the first power control parameter group is used for determining first reference power, and the first reference power is used for determining the sending power of the first signal.

As one embodiment, the unit of the first reference power is dBm (millidecibel).

As one embodiment, the unit of the sending power of the first signal is dBm (millidecibel).

As one embodiment, the first reference power is linearly correlated to a first component, and a linear coefficient between the first reference power and the first component is 1.

As one sub-embodiment of the above-mentioned embodiment, the first component is a power benchmark.

As one sub-embodiment of the above-mentioned embodiment, the first component is $P_{0\_PUSCH,b,f,c}(j)$.

As one sub-embodiment of the above-mentioned embodiment, the first component is $P_{0\_UE\_PUSCH,b,f,c}(j)$.

As one sub-embodiment of the above-mentioned embodiment, the first component is $P_0$ used for PUSCH power control.

As one embodiment, a measurement for a target reference signal is used for determining a first path loss, and the target reference signal is transmitted in a target reference signal resource; and the first reference power is linearly correlated to the first path loss, and a linear coefficient between the first reference power and the first path loss is a first coefficient.

As one sub-embodiment of the above-mentioned embodiment, the target reference signal resource comprises a CSI-RS resource.

As one sub-embodiment of the above-mentioned embodiment, the target reference signal resource comprises an SSB resource.

As one sub-embodiment of the above-mentioned embodiment, the first path loss is equal to the sending power of the target reference signal minus the RSRP (Reference Signal Received Power) of the target reference signal.

As one sub-embodiment of the above-mentioned embodiment, the first coefficient is a non-negative real number less than or equal to 1.

As one sub-embodiment of the above-mentioned embodiment, the first coefficient is $a_{b,f,c}(j)$.

As one sub-embodiment of the above-mentioned embodiment, the first coefficient is $\alpha$ used for PUSCH power control.

As one embodiment, the first reference power is linearly correlated to a second component, and a linear coefficient between the first reference power and the second component is 1; and the second component is correlated to the bandwidth in a unit of RBs (Resource Blocks), to which the first signal is allocated.

As one embodiment, the RB comprises a PRB (Physical Resource Block).

As one embodiment, the first reference power is linearly correlated to a third component, a linear coefficient between the first reference power and the third component is 1, and the third component is correlated to the number of REs occupied by the first signal and the number and size of code blocks carried by the first signal.

As one sub-embodiment of the above-mentioned embodiment, the third component is $\Delta_{TF,b,f,c}(i)$.

As one embodiment, the first reference power is linearly correlated to a fourth component, a linear coefficient between the first reference power and the fourth component is 1, and the fourth component is a power control adjustment state.

As one sub-embodiment of the above-mentioned embodiment, the fourth component is a power control adjustment state of the PUSCH.

As one sub-embodiment of the above-mentioned embodiment, the fourth component is $f_{b,f,c}(i, l)$.

As one embodiment, the first signal is transmitted on an uplink BWP (BandWidth Part) b of a carrier f of a serving cell c by using a parameter set configuration with an index of j.

As one embodiment, the first signal is transmitted on an uplink BWP b of a carrier f of a serving cell c in a transmission occasion i.

As one embodiment, the first signal is transmitted on an uplink BWP b of a carrier f of a serving cell c in a transmission occasion i by using a power control adjustment state with an index of *l*.

As one embodiment, the first signal is transmitted on an uplink BWP b of a carrier f of a serving cell c in a transmission occasion i by using a parameter set configuration with an index of j and a power control adjustment state with an index of l.

As one embodiment, the first reference power is respectively linearly correlated with the first component, the first path loss, the second component and the fourth component; and the linear coefficients between the first reference power and the first component, and the second component, and the fourth component are respectively 1, and the linear coefficient between the first reference power and the first path loss is the first coefficient.

As one embodiment, the first reference power is respectively linearly correlated to the first component, the first path loss, the second component, the third component, and the fourth component; and the linear coefficients between the first reference power and the first component, and the second component, and the third component, and the fourth component are respectively 1, and the linear coefficient between the first reference power and the first path loss is the first coefficient.

As one embodiment, the first power control parameter group comprises at least one of the first component, an identifier (ID) of the target reference signal resource, the first coefficient and the power control adjustment state index corresponding to the first signal.

As one embodiment, the first power control parameter group comprises the first component, the first coefficient, an identifier of the target reference signal resource and the power control adjustment state index corresponding to the first signal.

As one embodiment, the first power control parameter group comprises the first component, the first coefficient and the power control adjustment state index corresponding to the first signal.

As one embodiment, the first power control parameter group comprises the first component and the first coefficient.

As one embodiment, the first power control parameter group comprises an identifier of the target reference signal resource.

As one embodiment, the sending power of the first signal is equal to a first reference power value.

As one embodiment, the sending power of the first signal is equal to a minimum value of the first reference power and the first power threshold value.

As one embodiment, the first power threshold value is a maximum output power configured for the first node.

As one embodiment, the unit of the first power threshold value is dBm (millidecibel).

As one embodiment, the first power threshold value is $P_{CMAX,f,c}(i)$.

## Embodiment 8

Embodiment 8 illustrates a schematic diagram in which an indication of a first domain in first signaling depends on a first bit group in the first signaling according to one embodiment of the present application, as shown in FIG. 8. In Embodiment 8, the first domain in the first signaling is used for determining a first SRI group, and the first SRI group is used for determining a first SRS resource group; the first SRI group is one SRI group in a target SRI group pool, the target SRI group pool is a first candidate SRI group pool or a second candidate SRI group pool, the first candidate SRI group pool and the second candidate SRI group pool respectively comprise a plurality of SRI groups, and one SRI group comprises at least one SRI; and whether the target SRI group pool is the first candidate SRI group pool or the second candidate SRI group pool depends on the first bit group in the first signaling.

As one embodiment, the first domain in the first signaling is used by a first node for determining the first SRI group, and the first SRI group is used by the first node for determining the first SRS resource group.

As one embodiment, the first domain in the first signaling is used for determining the first SRI group from the target SRI group pool.

As one embodiment, the first domain in the first signaling indicates the first SRI group from the target SRI group pool.

As one embodiment, when the first bit group in the first signaling indicates that a first signal only carries one codeword, the target SRI group pool is the first candidate SRI group pool; and when the first bit group in the first signaling indicates that a first signal carries two codewords, the target SRI group pool is the second candidate SRI group pool.

As one embodiment, each SRI group in the first candidate SRI group pool corresponds to a code point, and each SRI group in the second candidate SRI group pool corresponds to a code point; and the first SRI group is an SRI group, corresponding to a value of the first domain in the first signaling, in the target SRI group pool.

As one sub-embodiment of the above-mentioned embodiment, the code point is a code point of a DCI field SRS resource indicator, and the first domain is the DCI field SRS resource indicator.

As one sub-embodiment of the above-mentioned embodiment, the code point is a code point of the first domain.

As one sub-embodiment of the above-mentioned embodiment, one code point is a candidate value of the first domain.

As one sub-embodiment of the above-mentioned embodiment, any two different SRI groups in the first candidate SRI group pool correspond to different code points, and any two different SRI groups in the second candidate SRI group pool correspond to different code points.

As one sub-embodiment of the above-mentioned embodiment, at least one SRI group in the first candidate SRI group pool and one SRI group in the second candidate SRI group pool correspond to the same code point.

As one sub-embodiment of the above-mentioned embodiment, the first candidate SRI group pool comprises P1 SRI groups, and the code points corresponding to the P1 SRI groups are respectively 0, ..., and P1-1; the second candidate SRI group pool comprises P2 SRI groups, and the code points corresponding to the P2 SRI groups are respectively 0, ..., and P2-1; and P1 and P2 are respectively positive integers greater than 1.

As one embodiment, the first SRI group is used for determining the number of SRS resources included in the first SRS resource group.

As one embodiment, the number of SRIs included in the first SRI group is equal to the number of SRS resources included in the first SRS resource group.

As one embodiment, the first SRI group indicates the first SRS resource group from the first SRS resource group.

As one embodiment, the first SRI group indicates the SRI corresponding to each SRS resource in the first SRS resource group.

As one embodiment, the first SRS resource group comprises SRS resources, with all corresponding SRIs belonging to the first SRI group, in the first SRS resource group.

As one embodiment, the first SRS resource group consists of SRS resources, with all corresponding SRIs belonging to the first SRI group, in the first SRS resource group.

As one embodiment, any SRI included in any SRI group in the first candidate SRI group pool is a non-negative integer less than the number of SRS resources included in the first SRS resource set, and any SRI included in any SRI group in the second candidate SRI group pool is a non-negative integer less than the number of SRS resources included in the first SRS resource set.

As one embodiment, the number of SRIs included in any SRI group in the first candidate SRI group pool is not greater than a second layer number threshold value, and the number of SRIs included in any SRI group in the second candidate SRI group pool is not greater than the first layer number threshold value; and the second layer number threshold value and the first layer number threshold value are respectively positive integers, and the second layer number threshold value is not greater than the first layer number threshold value.

As one sub-embodiment of the above-mentioned embodiment, the second layer number threshold value is less than the first layer number threshold value, and the number of SRIs included in any SRI group in the second candidate SRI group pool is greater than the second layer number threshold value and not greater than the first layer number threshold value.

As one embodiment, the bitwidth of the first domain in the first signaling is equal to a rounded-up integer of a 2-base logarithm of a maximum value of the number of SRI groups included in the first candidate SRI group pool and the number of SRI groups included in the second candidate SRI group pool.

As one embodiment, for any given number of SRS resources included in the first SRS resource set, the first candidate SRI group pool is fixed.

As one embodiment, for any given number of SRS resources included in the first SRS resource set and any given value of the second layer number threshold value, the first candidate SRI group pool is fixed.

As one embodiment, for any given number of SRS resources included in the first SRS resource set and any given value of the first layer number threshold value, the second candidate SRI group pool is fixed.

As one embodiment, for any given number of SRS resources included in the first SRS resource set, any given value of the first layer number threshold value and any given value of the second layer number threshold value, the second candidate SRI group pool is fixed.

As one embodiment, the first candidate SRI group pool is configurable.

As one embodiment, the second candidate SRI group pool is configurable.

As one embodiment, the first candidate SRI group pool is configured by RRC signaling.

As one embodiment, the second candidate SRI group pool is configured by the RRC signaling.

As one embodiment, the meaning of the sentence that an indication of the first domain in the first signaling depends on the first bit group in the first signaling comprises: whether the target SRI group pool is the first candidate SRI group pool or the second candidate SRI group pool depends on the first bit group in the first signaling.

**Embodiment 9**

Embodiment 9 illustrates a schematic diagram in which a first power control parameter group depends on a first bit group in first signaling according to one embodiment of the present application, as shown in FIG. 9. In Embodiment 9, N1 first-type indexes and N1 power control parameter groups are in one-to-one correspondence, and N2 first-type indexes and N2 power control parameter groups are in one-to-one correspondence; N1 and N2 are respectively positive integers greater than 1; the first domain in the first signaling is used for determining a first integer, a fourth index is one of the K first-type indexes, and a value of the fourth index is equal to the first integer; the first power control parameter group is a power control parameter group corresponding to the fourth index in the K power control parameter groups; K is equal to N1 and the K power control parameter groups are the N1 power control parameter groups and the K first-type indexes are the N1 first-type indexes, or K is equal to the N2 and the K power control parameter groups are the N2 power control parameter groups and the K first-type indexes are the N2 first-type indexes; and whether the K power control parameter groups are the N1 power control parameter groups or the N2 power control parameter groups depends on the first bit group in the first signaling.

As one embodiment, any of the N1 power control parameter groups is one of Q candidate power control parameter groups, and any of the N2 power control parameter groups is one of the Q candidate power control parameter groups, and Q is a positive integer greater than 1; and a fourth information block is used for configuring the Q candidate power control parameter groups.

As one embodiment, the N1 power control parameter groups respectively comprise N1 power control parameter subgroups, and any of the N1 power control parameter subgroups is one of the Q candidate power control parameter groups; the N2 power control parameter groups respectively comprise N2 power control parameter subgroups, and any of the N2 power control parameter subgroups is one of the Q candidate power control parameter groups; Q is a positive integer greater than 1; and a fourth information block is used for configuring the Q candidate power control parameter groups.

As one embodiment, any of the Q candidate power control parameter groups is identified by one second-type index.

As one embodiment, the second-type index is a non-negative integer.

As one embodiment, the second-type index is P0-PUSCH-AlphaSetId.

As one embodiment, there are two power control parameter groups corresponding to equal second-type indexes in the N1 power control parameter groups.

As one embodiment, there are two power control parameter groups corresponding to equal second-type indexes in the N2 power control parameter groups.

As one embodiment, there are two power control parameter subgroups corresponding to equal second-type indexes in the N1 power control parameter subgroups.

As one embodiment, there are two power control parameter subgroups corresponding to equal second-type indexes in the N2 power control parameter subgroups.

As one embodiment, there is one power control parameter group corresponding to the second-type index in the N1 power control parameter groups equal to the second-type index corresponding to one power control parameter group in the N2 power control parameter groups.

As one embodiment, N1 and N2 are both related to the bitwidth of the first domain in the first signaling.

As one embodiment, N1 is not less than the number of SRI groups included in the first candidate SRI group pool.

As one embodiment, N1 is equal to the number of SRI groups included in the first candidate SRI group pool.

As one embodiment, N2 is not less than the number of SRI groups included in the second candidate SRI group pool.

As one embodiment, N2 is equal to the number of SRI groups included in the second candidate SRI group pool.

As one embodiment, N1 is equal to N2.

As one embodiment, N1 is not equal to N2.

As one embodiment, N1 is greater than N2.

As one embodiment, N1 is less than N2.

As one embodiment, a value of the first domain in the first signaling is less than a maximum value of N1 and N2.

As one embodiment, N1 is not greater than the number of candidate values of the first domain in the first signaling.

As one embodiment, N2 is not greater than the number of candidate values of the first domain in the first signaling.

As one embodiment, the N1 first-type indexes are respectively N1 non-negative integers, and the N2 first-type indexes are respectively N2 non-negative integers.

As one embodiment, the N1 first-type indexes are mutually unequal, and the N2 first-type indexes are mutually unequal.

As one embodiment, the N1 first-type indexes are respectively 0, 1, ..., and N1-1; and the N2 first-type indexes are respectively 0, 1, ..., and N2-1.

As one embodiment, the N1 first-type indexes are respectively used for identifying N1 SRI-PUSCH-Power-Control, and the N2 first-type indexes are respectively used for identifying N2 SRI-PUSCH-PowerControl.

As one embodiment, there is at least one first-type index in the N1 first-type indexes that is equal to one of the N2 first-type indexes.

As one embodiment, the first integer is equal to the value of the first domain in the first signaling.

As one embodiment, the first integer is equal to the value of the first domain in the first signaling modulo a first threshold value; and the first threshold value is a positive integer.

As one embodiment, the first threshold value is configurable.

As one embodiment, the first threshold value is configured by RRC signaling.

As one embodiment, when the first bit group in the first signaling indicates that the first signal only carries one codeword, K is equal to N1 and the K power control parameter groups are the N1 power control parameter groups and the K first-type indexes are the N1 first-type indexes.

As one embodiment, when the first bit group in the first signaling indicates that the first signal carries two codewords, K is equal to the N2 and the K power control parameter groups are the N2 power control parameter groups and the K first-type indexes are the N2 first-type indexes.

As one embodiment, a fifth information block is used for determining the N1 first-type indexes, the N2 first-type indexes, the N1 power control parameter groups, and the N2 power control parameter groups.

As one embodiment, the fifth information block is carried by higher layer signaling.

As one embodiment, the fifth information block is carried by the RRC signaling.

As one embodiment, the fifth information block comprises information in all or parts of fields in at least one RRC IE.

As one embodiment, the fifth information block comprises information in all or parts of the fields in PUSCH-PowerControl IE.

As one embodiment, the fifth information block comprises information in an sri-PUSCH-MappingToAddModList field in PUSCH-PowerControl IE.

As one embodiment, the fifth information block comprises information in all or parts of fields in PUSCH-Config IE.

As one embodiment, the fifth information block comprises information in all or parts of fields in BWP-UplinkDedicated IE.

As one embodiment, the fifth information block comprises information in all or parts of fields in ServingCellConfig IE.

As one embodiment, the fifth information block is carried by MAC CE.

As one embodiment, the fifth information block is carried by DCI.

As one embodiment, the fifth information block is carried by the RRC signaling and the MAC CE.

As one embodiment, the fifth information block is carried by the higher layer signaling and the DCI.

As one embodiment, the fifth information block indicates the N1 first-type indexes and the N2 first-type indexes.

As one embodiment, the fifth information block indicates the N1 power control parameter groups and the N2 power control parameter groups.

As one embodiment, the fifth information block indicates a correspondence relationship between the N1 first-type indexes and the N1 power control parameter groups.

As one embodiment, the fifth information block indicates a correspondence relationship between the N2 first-type indexes and the N2 power control parameter groups.

As one embodiment, the fifth information block is used for configuring a mapping relationship between the N1 first-type indexes and the N1 power control parameter groups, and is used for configuring a mapping relationship between the N2 first-type indexes and the N2 power control parameter groups.

As one embodiment, the fifth information block comprises a first information sub-block and a second information sub-block, the first information sub-block is used for determining the N1 first-type indexes and the N1 power control parameter groups, and the second information sub-block is used for determining the N2 first-type indexes and the N2 power control parameter groups.

As one sub-embodiment of the above-mentioned embodiment, the first information sub-block is located before the second information sub-block in the fifth information block.

As one sub-embodiment of the above-mentioned embodiment, the first information sub-block is located after the second information sub-block in the fifth information block.

As one sub-embodiment of the above-mentioned embodiment, the name of a higher layer parameter carrying the first information sub-block is different from the name of a higher layer parameter carrying the second information sub-block.

As one sub-embodiment of the above-mentioned embodiment, the first information sub-block is used for configuring the mapping relationship between the N1 first-type indexes and the N1 power control parameter groups, and the second information sub-block is used for configuring the mapping relationship between the N2 first-type indexes and the N2 power control parameter groups.

As one sub-embodiment of the above-mentioned embodiment, the first information sub-block comprises N1 information groups, the N1 information groups respectively indicate the N1 first-type indexes, and the N1 information groups respectively indicate the N1 power control parameter groups; and the second information sub-block comprises N2 information groups, the N2 information groups respectively indicate the N2 first-type indexes, and the N2 information groups respectively indicate the N2 power control parameter groups.

As one reference embodiment of the above sub-embodiment, the N1 information groups respectively indicate the second-type indexes corresponding to the N1 power control parameter groups or the second-type indexes corresponding to the N1 power control parameter subgroups; and the N2 information groups respectively indicate the second-type index corresponding to the N2 power control parameter groups or the second-type index corresponding to the N2 power control parameter subgroups.

## Embodiment 10

Embodiment 10 illustrates a schematic diagram in which a first power control parameter group depends on a first bit group in first signaling according to one embodiment of the present application, as shown in FIG. 10. In Embodiment 10, the first power control parameter group is one of N3 power control parameter groups, any of the N4 first-type indexes corresponds to one of the N3 power control parameter groups, and N3 and N4 are respectively positive integers greater than 1; there are at least two first-type indexes in the N4 first-type indexes, corresponding to the same one of the N3 power control parameter groups; and the third index is one of the N4 first-type indexes, the first domain and the first bit group in the first signaling are jointly used for determining the third index from the N4 first-type indexes, and the first power control parameter group is one of the N3 power control parameter groups corresponding to the third index.

As one embodiment, when the first bit group in the first signaling indicates that the first signal only carries one codeword, a value of a third index is equal to a value of the first domain in the first signaling.

As one embodiment, when the first bit group in the first signaling indicates that the first signal carries two codewords, a value of a third index is equal to a value of the first domain in the first signaling plus a first offset; and the first offset is a positive integer.

As one embodiment, the N4 is greater than N3.

As one embodiment, the N4 first-type indexes are respectively N4 non-negative integers.

As one embodiment, the N4 first-type indexes are mutually unequal.

As one embodiment, the N4 first-type indexes are respectively 0, 1, ..., and N4-1.

As one embodiment, the N4 first-type indexes are respectively used for identifying N4 SRI-PUSCH-Power-

Control.

As one embodiment, any of the N3 power control parameter groups is one of Q candidate power control parameter groups, and Q is a positive integer greater than 1; and a fourth information block is used for configuring the Q candidate power control parameter groups.

As one embodiment, the N3 power control parameter groups respectively comprise N3 power control parameter subgroups, and any of the N3 power control parameter subgroups is one of the Q candidate power control parameter groups; Q is a positive integer greater than 1; and a fourth information block is used for configuring the Q candidate power control parameter groups.

As one embodiment, a sixth information block is used for determining the N3 power control parameter groups and the N4 first-type indexes, and the sixth information block is carried by higher-layer signaling.

As one embodiment, the sixth information block indicates the N3 power control parameter groups.

As one embodiment, the sixth information block indicates the N4 first-type indexes.

As one embodiment, the sixth information block indicates a correspondence relationship between the N3 power control parameter groups and the N4 first-type indexes.

As one embodiment, the sixth information block comprises information in all or parts of fields in PUSCH-PowerControl IE.

As one embodiment, the sixth information block comprises information in all or parts of fields in PUSCH-Config IE.

As one embodiment, the sixth information block comprises information in all or parts of fields in BWP-UplinkDedicated IE.

As one embodiment, the sixth information block comprises information in all or parts of fields in ServingCellConfig IE.

**Embodiment 11**

Embodiment 11 illustrates a schematic diagram in which a first power control parameter group depends on a first bit group in first signaling according to one embodiment of the present application, as shown in FIG. 11. In Embodiment 11, M first-type indexes and M power control parameter groups are in one-to-one correspondence; a first index is one first-type index of the M first-type indexes, and the first power control parameter group is a power control parameter group corresponding to the first index among the M power control parameter groups; and the first domain in the first signaling and the first bit group in the first signaling are used for determining the first index.

As one embodiment, any of the M power control parameter groups comprises one or more of $P_0$ for power control, alpha for power control, an identifier of a reference signal resource for measuring a path loss, or a power control adjustment state index.

As one embodiment, any of the M power control parameter groups comprises $P_0$ for power control, alpha for power control, an identifier of a reference signal resource for measuring a path loss, and a power control adjustment state index.

As one embodiment, any of the M power control parameter groups is one of Q candidate power control parameter groups, and Q is a positive integer greater than 1; a fourth information block is used for configuring the Q candidate power control parameter groups.

As one embodiment, the M power control parameter groups respectively comprise M power control parameter subgroups, and any of the M power control parameter subgroups is one of Q candidate power control parameter groups, and Q is a positive integer greater than 1; and a fourth information block is used for configuring the Q candidate power control parameter groups.

As one embodiment, any of the M power control parameter subgroups comprises $P_0$ for power control and alpha for power control.

As one embodiment, a fourth information block is carried by RRC signaling.

As one embodiment, the fourth information block comprises information in all or parts of fields in at least one RRC IE.

As one embodiment, the fourth information block comprises information in all or parts of fields in PUSCH-PowerControl IE.

As one embodiment, the fourth information block is carried by a p0-AlphaSets field in PUSCH-PowerControl IE.

As one embodiment, the fourth information block comprises information in all or parts of fields in PUSCH-Config IE.

As one embodiment, the fourth information block comprises information in all or parts of fields in BWP-UplinkDedicated IE.

As one embodiment, the fourth information block comprises information in all or parts of fields in ServingCell-Config IE.

As one embodiment, any of the Q candidate power control parameter groups comprises one or more of $P_0$ for power control, alpha for power control, the identifier of the reference signal resource for measuring the path loss, or the power control adjustment state index.

As one embodiment, any of the Q candidate power control parameter groups comprises $P_0$ for power control, alpha for power control, the identifier of the reference signal resource for measuring the path loss, and the power control adjustment state index.

As one embodiment, any of the Q candidate power control parameter groups comprises $P_0$ for power control and alpha for power control.

As one embodiment, any of the Q candidate power control parameter groups is identified by one second-type index.

As one embodiment, the second-type index is a non-negative integer.

As one embodiment, the second-type index is P0-PUSCH-AlphaSetId.

As one embodiment, there are the second-type indexes corresponding to two power control parameter groups in the M power control parameter groups.

As one embodiment, there are two power control parameter subgroups corresponding to equal second-type indexes in the M power control parameter subgroups.

As one embodiment, a first information block comprises M information sub-blocks, the M information sub-blocks and the M first-type indexes are in one-to-one correspondence, and the M information sub-blocks and the M power control parameter groups are in one-to-one correspondence; and any of the M information sub-blocks indicates a corresponding first-type index and a corresponding power control parameter group.

As one embodiment, the first information block comprises M information sub-blocks, the M information sub-blocks respectively indicate the M first-type indexes, and the M information sub-blocks respectively indicate the M power control parameter groups.

As one embodiment, any of the M information sub-blocks indicates a corresponding first-type index and the second-type index corresponding to a corresponding power control parameter group.

As one embodiment, any of the M information sub-blocks indicates a corresponding first-type index and the second-type index corresponding to a power control parameter subgroup in a corresponding power control parameter group.

As one embodiment, any of the M information sub-blocks indicates a corresponding first-type index, a corresponding power control parameter group comprises the identifier of the reference signal resource for measuring the path loss and the power control adjustment state index, and the second-type index corresponding to the power control parameter subgroup in the corresponding power control parameter group.

As one embodiment, any of the M first-type indexes and the corresponding power control parameter group are indicated by the same one of the M information sub-blocks.

As one embodiment, the M first-type indexes are respectively M non-negative integers.

As one embodiment, the M first-type indexes are mutually unequal.

As one embodiment, the M first-type indexes are respectively equal to 0, 1, ..., and M-1.

As one embodiment, the M first-type indexes are respectively M SRI-PUSCH-PowerControlId.

As one embodiment, the M first-type indexes are respectively used for identifying M SRI-PUSCH-PowerControl.

As one embodiment, at least one of the M first-type indexes is greater than a maximum candidate value of the first domain in the first signaling.

As one embodiment, a value of the first domain in the first signaling is less than M.

As one embodiment, M is greater than the number of SRI groups included in a first candidate SRI group pool.

As one embodiment, M is greater than the number of SRI groups included in a second candidate SRI group pool.

As one embodiment, M is not less than the sum of the number of SRI groups included in the first candidate SRI group pool and the number of SRI groups included in the second candidate SRI group pool.

As one embodiment, M is equal to the sum of the number of SRI groups included in the first candidate SRI group pool and the number of SRI groups included in the second candidate SRI group pool.

As one embodiment, M is equal to the sum of the smallest positive integer that is not less than the number of SRI groups included in the first candidate SRI group pool and is a positive integer power of 2 and the smallest positive integer that is not less than the number of SRI groups included in the second candidate SRI group pool and is a positive integer power of 2.

As one embodiment, M is equal to the smallest positive integer that is not less than the sum of the number of SRI groups included in the first candidate SRI group pool and the number of SRI groups included in the second candidate SRI group pool and is a positive integer power of 2.

As one embodiment, the first domain in the first signaling and the first bit group in the first signaling are used for determining the first index from the M first-type indexes.

As one embodiment, the first index is which of the M first-type indexes depends on the first domain in the first signaling and the first bit group in the first signaling.

As one embodiment, the determination of the first index depends on the first domain in the first signaling and the first bit group in the first signaling.

As one embodiment, the determination of the first index in the M first-type indexes depends on the first domain in the first signaling and the first bit group in the first signaling.

As one embodiment, when the first bit group in the first signaling indicates that the first signal only carries one codeword, the first index is one of the M first-type indexes that is equal to the value of the first domain in the first signaling.

As one embodiment, when the first bit group in the first signaling indicates that the first signal carries two codewords, the first index is one of the M first-type indexes that is equal to a first numerical value, the first numerical value is equal to the sum of the value of the first domain in the first signaling and a first offset, and the first offset is a positive integer.

As one embodiment, the first offset is configurable.

As one embodiment, the first offset is fixed.

As one embodiment, the first offset is related to the bitwidth of the first domain in the first signaling.

As one embodiment, the first offset is related to the number of SRI groups included in the first candidate SRI group pool.

As one embodiment, the first offset is related to the number of SRI groups included in the second candidate SRI group pool.

As one embodiment, the first offset is equal to the maximum candidate value of the first domain in the first signaling.

As one embodiment, the first offset is equal to the maximum candidate value of the first domain in the first signaling plus 1.

As one embodiment, the first offset is equal to the number of SRI groups included in the first candidate SRI group pool.

As one embodiment, the first offset is equal to the smallest positive integer that is not less than the number of SRI groups included in the first candidate SRI group pool and is a positive integer power of 2.

As one embodiment, the first offset is equal to a maximum value of the number of SRI groups included in the first candidate SRI group pool and the number of SRI groups included in the second candidate SRI group pool.

As one embodiment, the first offset is equal to the smallest positive integer that is not less than a second numerical value and is a positive integer power of 2, and the second numerical value is equal to the maximum value of the number of SRI groups included in the first candidate SRI group pool and the number of SRI groups included in the second candidate SRI group pool.

As one embodiment, when the first bit group in the first signaling indicates that the first signal only carries one codeword, the first index is one of the M first-type indexes that is equal to the value of the first domain in the first signaling multiplied by 2.

As one embodiment, when the first bit group in the first signaling indicates that the first signal carries two codewords, the first index is one of the M first-type indexes that is equal to a third numerical value, and the third numerical value is equal to the value of the first domain in the first signaling multiplied by 2 plus 1.

**Embodiment 12**

Embodiment 12 illustrates a schematic diagram in which a first power control parameter group depends on a first bit group in first signaling according to one embodiment of the present application, as shown in FIG. 12. In Embodiment 12, any power control parameter group in the first power control parameter group set corresponds to one of N first-type indexes, and any power control parameter group in a second power control parameter group set corresponds to one first-type index of the N first-type indexes; a second index is one first-type index of the N first-type indexes, and a value of the second index is equal to a value of the first domain in the first signaling; the first power control parameter group is a power control parameter group corresponding to the second index in a target power control parameter group set, and the target power control parameter group set is the first power control parameter group set or the second power control parameter group set; and whether the target power control parameter group set is the first power control parameter group set or the second power control parameter group set depends on the first bit group in the first signaling.

As one embodiment, any power control parameter group in the first power control parameter group set comprises one or more of $P_0$ for power control, alpha for power control, an identifier of a reference signal resource for measuring a path loss, or a power control adjustment state index.

As one embodiment, any power control parameter group in the second power control parameter group set comprises one or more of $P_0$ for power control, alpha for power control, an identifier of a reference signal resource for measuring a path loss, or a power control adjustment state index.

As one embodiment, any power control parameter group in the first power control parameter group set comprises $P_0$ for power control, alpha for power control, an identifier of a reference signal resource for measuring a path loss, and a power control adjustment state index.

As one embodiment, any power control parameter group in the second power control parameter group set comprises $P_0$ for power control, alpha for power control, an identifier of a reference signal resource for measuring a path loss, and a power control adjustment state index.

As one embodiment, any power control parameter group in the first power control parameter group set is one of Q candidate power control parameter groups, and any power control parameter group in the second power control parameter group set is one of the Q candidate power control parameter groups; and Q is a positive integer greater than 1; and a fourth information block is used for configuring the Q candidate power control parameter groups.

As one embodiment, any power control parameter group in the first power control parameter group set comprises one power control parameter subgroup, and any power control parameter subgroup in the first power control parameter group set is one of the Q candidate power control parameter groups; any power control parameter group in the second power control parameter group set comprises one power control parameter subgroup, and any power control parameter subgroup in the second power control parameter group set is one of the Q candidate power control parameter groups; Q is a positive integer greater than 1; and a fourth information block is used for configuring the Q candidate power control parameter groups.

As one embodiment, any power control parameter subgroup in the first power control parameter group set comprises $P_0$ for power control and alpha for power control; and any power control parameter subgroup in the second power control parameter group set comprises $P_0$ for power control and alpha for power control.

As one embodiment, any of the Q candidate power control parameter groups is identified by one second-type index.

As one embodiment, there are equal second-type indexes corresponding to two power control parameter groups in the first power control parameter group set.

As one embodiment, there are equal second-type indexes corresponding to two power control parameter groups in the second power control parameter group set.

As one embodiment, there are equal second-type indexes corresponding to two power control parameter subgroups in the first power control parameter group set.

As one embodiment, there are equal second-type indexes corresponding to two power control parameter subgroups in the second power control parameter group set.

As one embodiment, there is the second-type index corresponding to one power control parameter group in the first power control parameter group set equal to the second-type index corresponding to one power control parameter group in the second power control parameter group set.

As one embodiment, there is the second-type index corresponding to one power control parameter subgroup in the first power control parameter group set equal to the second-type index corresponding to one power control parameter subgroup in the second power control parameter group set.

As one embodiment, the number of power control parameter groups included in at least one of the first power control parameter group set and the second power control parameter group set is equal to N.

As one embodiment, there is the number of power control parameter groups included in one of the first power control parameter group set and the second power control parameter group set less than N.

As one embodiment, the number of power control parameter groups included in the first power control parameter group set is equal to N.

As one embodiment, the number of power control parameter groups included in the second power control parameter group set is equal to N.

As one embodiment, the number of power control parameter groups included in the first power control parameter group set is less than N.

As one embodiment, the number of power control parameter groups included in the second power control parameter group set is less than N.

As one embodiment, the number of power control parameter groups included in the first power control parameter group set is not equal to the number of power control parameter groups included in the second power control parameter group set.

As one embodiment, the number of power control parameter groups included in the first power control parameter group set is equal to the number of power control parameter groups included in the second power control parameter group set.

As one embodiment, the first power control parameter group set and the second power control parameter group set are respectively configured.

As one embodiment, the number of power control parameter groups included in the first power control parameter group set is equal to N, and the N first-type indexes and the N power control parameter groups included in the first power control parameter group set are in one-to-one correspondence.

As one embodiment, the number of power control parameter groups included in the second power control parameter group set is equal to N, and the N first-type indexes and the N power control parameter groups included in the second power control parameter group set are in one-to-one correspondence.

As one embodiment, there are no two power control parameter groups corresponding to the same one first-type index of the N first-type indexes in the first power control parameter group set.

As one embodiment, there are no two power control parameter groups corresponding to the same one first-type index of the N first-type indexes in the second power control parameter group set.

As one embodiment, there is one power control parameter group in the first power control parameter group set and one power control parameter group in the second power control parameter group set that correspond to the same one first-type index of the N first-type indexes.

As one embodiment, any power control parameter group in the first power control parameter group set corresponds to only one first-type index of the N first-type indexes.

As one embodiment, any power control parameter group in the second power control parameter group set corresponds to only one first-type index of the N first-type indexes.

As one embodiment, any of the N first-type indexes corresponds to one power control parameter group in at least one of the first power control parameter group set or the second power control parameter group set.

As one embodiment, there is no one first-type index in the N first-type indexes that corresponds to a plurality of power control parameter groups in the first power control parameter group set.

As one embodiment, there is no one first-type index in the N first-type indexes that corresponds to a plurality of power control parameter groups in the second power control parameter group set.

As one embodiment, there is one first-type index in the N first-type indexes that corresponds to a plurality of power control parameter groups in the first power control parameter group set, or corresponds to a plurality of power control parameter groups in the second power control parameter group set.

As one embodiment, the first power control parameter group set comprises N power control parameter groups, the second power control parameter group set comprises N0 power control parameter groups, and N0 is a positive integer not greater than the N; and the N first-type indexes and the N power control parameter groups are in one-to-one correspondence, and the N0 of the N first-type indexes and the N0 power control parameter groups are in one-to-one correspondence.

As one sub-embodiment of the above-mentioned embodiment, the N0 first-type indexes are N0 smallest ones of the N first-type indexes.

As one sub-embodiment of the above-mentioned embodiment, N0 is less than N.

As one sub-embodiment of the above-mentioned embodiment, N0 is equal to N.

As one sub-embodiment of the above-mentioned embodiment, N0 is equal to a minimum value of the number of SRI groups included in the first candidate SRI group pool and the number of SRI groups included in the second candidate SRI group pool.

As one embodiment, the size of N is related to the bitwidth of the first domain in the first signaling.

As one embodiment, the N first-type indexes are respectively N non-negative integers.

As one embodiment, the N first-type indexes are mutually unequal.

As one embodiment, the N first-type indexes are respectively equal to 0, 1, ..., and N-1.

As one embodiment, the N first-type indexes are respectively N SRI-PUSCH-PowerControlId.

As one embodiment, the N first-type indexes are respectively used for identifying N SRI-PUSCH-PowerControl.

As one embodiment, a candidate value of the first domain in the first signaling comprises the N first-type indexes.

As one embodiment, a candidate value of the first domain in the first signaling is the N first-type indexes.

As one embodiment, the value of the first domain in the first signaling is less than N.

As one embodiment, N is not greater than a maximum candidate value of the first domain in the first signaling.

As one embodiment, N is equal to a maximum value of the number of SRI groups included in the first candidate SRI group pool and the number of SRI groups included in the second candidate SRI group pool.

As one embodiment, N is not less than a maximum value of the number of SRI groups included in the first candidate SRI group pool and the number of SRI groups included in the second candidate SRI group pool.

As one embodiment, N is less than the sum of the number of SRI groups included in the first candidate SRI group pool and the number of SRI groups included in the second candidate SRI group pool.

As one embodiment, the target power control parameter group set is the first power control parameter group set.

As one embodiment, the target power control parameter group set is the second power control parameter group set.

As one embodiment, the first bit group in the first signaling is used for determining whether the target power control parameter group set is the first power control parameter group set or the second power control parameter group set.

As one embodiment, when the first bit group in the first signaling indicates that the first signal only carries one codeword, the target power control parameter group set is the first power control parameter group set; and when the first bit group in the first signaling indicates that the first signal carries two codewords, the target power control parameter group set is the second power control parameter group set.

## Embodiment 13

Embodiment 13 illustrates a schematic diagram of a second information block according to one embodiment of the present application, as shown in FIG. 13. In Embodiment 13, the second information block comprises N information sub-blocks; the N information sub-blocks and the N first-type indexes are in one-to-one correspondence; the N information sub-blocks respectively indicate corresponding first-type indexes; a given information sub-block is any of the N information sub-blocks, and the given information sub-block indicates a given first-type index of the N first-type indexes; and the given information sub-block indicates at least one of a power control parameter group corresponding to the given first-type index in the first power control parameter group set or a power control parameter group corresponding to the given first-type index in the second power control parameter group set. In FIG. 13, the N information sub-blocks are respectively represented as an information sub-block #0, ..., and an information sub-block #(N-1).

As one embodiment, the given information sub-block indicates at least one of the second-type index corresponding to the power control parameter group corresponding to the given first-type index in the first power control parameter group set or the second-type index corresponding to the power control parameter group corresponding to the given first-type index in the second power control parameter group set.

As one embodiment, the given information sub-block indicates at least one of the second-type index corresponding to the power control parameter subgroup included in the power control parameter group corresponding to the given first-type index in the first power control parameter group set or the second-type index corresponding to the power control parameter subgroup included in the power control parameter group corresponding to the given first-type index in the second power control parameter group set.

As one embodiment, the given information sub-block indicates a power control parameter group corresponding to the given first-type index in the first power control parameter group set and a power control parameter group corresponding to the given first-type index in the second power control parameter group set; the given information sub-block comprises a second higher layer parameter and a third higher layer parameter; and the second higher layer parameter indicates the power control parameter group corresponding to the given first-type index in the first power control parameter group set, and the third higher layer parameter indicates the power control parameter group corresponding to the given first-type index in the second power control parameter group set.

As one embodiment, the given information sub-block indicates a power control parameter group corresponding to the given first-type index in the first power control parameter group set and a power control parameter group corresponding to the given first-type index in the second power control parameter group set; a given type is a type of any power control parameter, and the given information sub-block comprises the second higher layer parameter and the third higher layer parameter; and the second higher layer parameter indicates a power control parameter of the given type in the power control parameter group corresponding to the given first-type index in the first power control parameter group set, and the third higher layer parameter indicates a power control parameter of the given type in the power control parameter group corresponding to the given first-type index in the second power control parameter group set.

As one sub-embodiment of the above-mentioned embodiment, types of the power control parameters comprise $P_0$ for power control, alpha for power control, an identifier of a reference signal resource for measuring a path loss, and a power control adjustment state index.

As one embodiment, the second higher layer parameter is located before the third higher layer parameter in the given information sub-block.

As one embodiment, the second higher layer parameter is located after the third higher layer parameter in the given information sub-block.

As one embodiment, the name of the second higher layer parameter is different from the name of the third higher layer parameter.

As one embodiment, any power control parameter group in the first power control parameter group set and the corresponding first-type index are indicated by the same one of the N information sub-blocks, and any power control parameter group in the second power control parameter group set and the corresponding first-type index are indicated by the same one of the N information sub-blocks.

As one embodiment, the N information sub-blocks respectively indicate the N power control parameter groups, and N0 of the N information sub-blocks respectively indicate the N0 power control parameter groups.

## Embodiment 14

Embodiment 14 illustrates a schematic diagram in which when and only when a first condition is satisfied, a first power control parameter group depends on a first bit group in first signaling according to one embodiment of the present application, as shown in FIG. 14.

As one embodiment, whether the first condition is satisfied is used for determining whether the first power control parameter group depends on the first bit group in the first signaling.

As one embodiment, when the first condition is not met, the first power control parameter group does not depend on the first bit group in the first signaling.

As one embodiment, when the first condition is not met, the first bit group in the first signaling is not used for determining the first power control parameter group.

As one embodiment, when the first condition is not met, the first power control parameter group depends on only a first domain of the first domain and the first bit group in the first signaling.

As one embodiment, when the first condition is not met, the first power control parameter group is one of P power control parameter groups, and P is a positive integer greater than 1; the P power control parameter groups and P first-type indexes are in one-to-one correspondence, and the first power control parameter group is one of the P power control parameter groups that has a corresponding first-type index equal to a value of the first domain in the first signaling; a seventh information block is used for determining the P power control parameter groups and the P first-type indexes; and the seventh information block is carried by higher layer signaling.

As one sub-embodiment of the above-mentioned embodiment, the seventh information block indicates the P power control parameter groups and the P first-type indexes.

As one sub-embodiment of the above-mentioned embodiment, the seventh information block indicates a correspondence relationship between the P power control parameter groups and the P first-type indexes.

As one sub-embodiment of the above-mentioned embodiment, the seventh information block comprises information in all or parts of fields in PUSCH-PowerControl IE.

As one sub-embodiment of the above-mentioned embodiment, the seventh information block comprises information in an sri-PUSCH-MappingToAddModList field in PUSCH-PowerControl IE.

As one sub-embodiment of the above-mentioned embodiment, the seventh information block comprises information in all or parts of fields in PUSCH-Config IE.

As one sub-embodiment of the above-mentioned embodiment, the seventh information block comprises information in all or parts of fields in BWP-UplinkDedicated IE.

As one sub-embodiment of the above-mentioned embodiment, the P first-type indexes are respectively non-negative integers.

As one sub-embodiment of the above-mentioned embodiment, the P first-type indexes are P SRI-PUSCH-PowerControlId.

As one embodiment, whether the first condition is satisfied is used for determining whether the first bit group in the first signaling is used for indicating the number of codewords carried by the first signal.

As one embodiment, whether the first condition is satisfied is used for determining whether the number of codewords carried by the first signal depends on the first bit group in the first signaling.

As one embodiment, when and only when the first condition is satisfied, the first bit group in the first signaling is used for indicating the number of codewords carried by the first signal.

As one embodiment, when the first condition is not met, the number of codewords carried by the first signal is fixed as 1.

As one embodiment, no matter whether the first condition is satisfied, the first power control parameter group depends on the first domain in the first signaling.

As one embodiment, whether the first condition is satisfied is used for determining whether an indication of the first domain in the first signaling depends on the first bit group in the first signaling.

As one embodiment, when and only when the first condition is satisfied, the indication of the first domain in the first signaling depends on the first bit group in the first signaling.

As one embodiment, the first condition comprises: a first node is configured with a first higher layer parameter.

As one embodiment, the first condition comprises: the first node is configured with a first higher layer parameter and a value of the first higher layer parameter configured for the first node belongs to a first parameter value set, and the first parameter value set comprises at least one parameter value.

As one embodiment, the first higher layer parameter indicates that an uplink two-codeword transmission is enabled.

As one embodiment, the name of the first higher layer parameter comprises "maxNrofCodeWords" .

As one embodiment, the name of the first higher layer parameter comprises "maxNrofCodeWordsScheduled-ByDCI".

As one embodiment, the first higher layer parameter is indicated by PUSCH-Config IE.

As one embodiment, the first higher layer parameter is indicated by BWP-UplinkDedicated IE.

As one embodiment, the first parameter value set only comprises one parameter value, and the one parameter value is equal to 2.

As one embodiment, the first parameter value set only comprises one parameter value, and the one parameter value is equal to n2.

As one embodiment, the name of the first higher layer parameter comprises "maxRank".

As one embodiment, the name of the first higher layer parameter comprises "max" and "Rank".

As one embodiment, the name of the first higher layer parameter comprises "max", "MIMOs", and "Layers".

As one embodiment, the name of the first higher layer parameter comprises "maxMIMO-Layers".

As one embodiment, the first higher layer parameter is indicated by PUSCH-ServingCellConfig IE.

As one embodiment, the first parameter value set comprises a plurality of parameter values, and any of the plurality of parameter values is a positive integer greater than 4.

As one embodiment, the name of the first higher layer parameter comprises "8Tx".

As one embodiment, the first condition comprises: the number of SRS resources included in a first SRS resource set is greater than 4.

As one embodiment, the first condition comprises: the number of SRS resource sets with a corresponding higher layer parameter "usage" configured by a higher layer parameter "srs-ResourceSetToAddModList" set as "nonCodebook" is 1.

As one embodiment, the first condition comprises: the number of SRS resource sets with a corresponding higher layer parameter "usage" configured by a higher layer parameter "srs-ResourceSetToAddModListDCI-0-2-r16" set as "nonCodebook" is 1.

As one embodiment, a third information block is used for determining a first time domain resource, and the first time domain resource comprises at least one symbol; and the first condition comprises: a time domain resource in which the first signal is allocated comprises at least one symbol not belonging to the first time domain resource.

As one embodiment, the first signaling indicates the time domain resource in which the first signal is allocated.

As one embodiment, the DCI field time domain resource assignment in the first signaling indicates the time domain resource in which the first signal is allocated.

## Embodiment 15

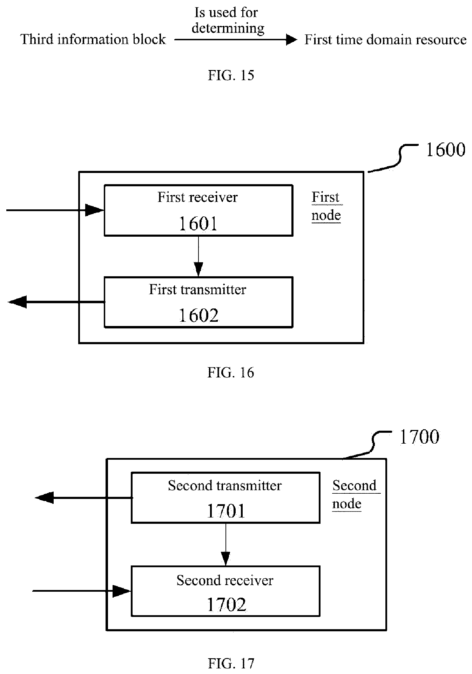

Embodiment 15 illustrates a schematic diagram in which a third information block is used for determining a first time domain resource according to one embodiment of the present application, as shown in FIG. 15.

As one embodiment, the first time domain resource comprises at least one slot.

As one embodiment, the first time domain resource comprises at least one subframe.

As one embodiment, a sender of first signaling simultaneously receives and sends wireless signals in the first time domain resource.

As one embodiment, a sender of first signaling can simultaneously receive and send wireless signals in the first time domain resource.

As one embodiment, a sender of first signaling simultaneously receives and sends wireless signals in at least one symbol in the first time domain resource.

As one embodiment, a sender of first signaling simultaneously receives and sends wireless signals in any symbol in the first time domain resource.

As one embodiment, a symbol in the first time domain resource can be simultaneously used for uplink and downlink.

As one embodiment, a symbol in the first time domain resource are simultaneously used for uplink and downlink.

As one embodiment, any symbol in the first time domain resource can be simultaneously used for uplink and downlink.

As one embodiment, any symbol in the first time domain resource is simultaneously used for uplink and downlink.

As one embodiment, at least one symbol in the first time domain resource is simultaneously used for uplink and downlink.

As one embodiment, at least one symbol in the first time domain resource is configured as uplink in a first frequency domain resource.

As one embodiment, any symbol in the first time domain resource is configured as uplink in a first frequency domain resource.

As one embodiment, at least one symbol in the first time domain resource is configured as uplink in a first frequency domain resource and as downlink in a second frequency domain resource; and the first frequency domain resource and the second frequency domain resource are mutually orthogonal in a frequency domain.

As one embodiment, any symbol in the first time domain resource is configured as uplink in a first frequency domain resource and as downlink in a second frequency domain resource; and the first frequency domain resource and the second frequency domain resource are mutually orthogonal in a frequency domain.

As one embodiment, at least one symbol in the first time domain resource is used for uplink in a first frequency domain resource.

As one embodiment, any symbol in the first time domain resource is used for uplink in a first frequency domain resource.

As one embodiment, at least one symbol in the first time domain resource is used for uplink in a first frequency domain resource and for downlink in a second frequency domain resource; and the first frequency domain resource and the second frequency domain resource are mutually orthogonal in a frequency domain.

As one embodiment, any symbol in the first time domain resource is used for uplink in a first frequency domain resource and for downlink in a second frequency domain resource; and the first frequency domain resource and the second frequency domain resource are mutually orthogonal in a frequency domain.

As one embodiment, the first frequency domain resource and the second frequency domain resource belong to the same one BWP.

As one embodiment, at least one symbol in the first time domain resource is configured as uplink in a part of RBs in one BWP and configured as downlink in another part of RBs in the one BWP.

As one embodiment, at least one symbol in the first time domain resource is used for uplink in a part of RBs in one BWP and for downlink in another part of RBs in the one BWP.

As one embodiment, the first time domain resource is used for a full-duplex mode.

As one embodiment, the first time domain resource is used for a full-duplex mode by the sender of the first signaling.

As one embodiment, the full-duplex mode comprises subband non-overlapping full duplex.

As one embodiment, the full-duplex mode comprises subband full duplex.

As one embodiment, the first node only receives wireless signals or only sends wireless signals in any symbol in the first time domain resource.

As one embodiment, the symbol comprises an OFDM (Orthogonal Frequency Division Multiplexing) symbol.

As one embodiment, the symbol is an OFDM symbol.

As one embodiment, the symbol comprises a DFT-S-OFDM (Discrete Fourier Transform Spread OFDM) symbol.

As one embodiment, the symbol is obtained after OFDM symbol generation of an output of transform precoding.

As one embodiment, the third information block indicates the first time domain resource.

As one embodiment, the third information block configures a symbol in the first time domain resource as uplink in the first frequency domain resource.

As one embodiment, the third information block configures a symbol in the first time domain resource as uplink in the first frequency domain resource and as downlink in the second frequency domain resource; and the first frequency domain resource and the second frequency domain resource are mutually orthogonal in a frequency domain.

As one embodiment, the third information block indicates the first frequency domain resource.

As one embodiment, the first frequency domain resource comprises a plurality of RBs.

As one embodiment, the first frequency domain resource comprises a plurality of consecutive RBs.

As one embodiment, the first frequency domain resource comprises a plurality of inconsecutive RBs.

As one embodiment, the second frequency domain resource comprises a plurality of RBs.

As one embodiment, the second frequency domain resource comprises a plurality of consecutive RBs.

As one embodiment, the second frequency domain resource comprises a plurality of inconsecutive RBs.

As one embodiment, the RB in the present application comprises a PRB (Physical Resource Block).

## Embodiment 16

Embodiment 16 illustrates a structural block diagram of a processing device used in a first node according to one embodiment of the present application, as shown in FIG. 16. In FIG. 16, the processing device 1600 in the first node comprises a first receiver 1601 and a first transmitter 1602.

In Embodiment 16, the first receiver 1601 receives first signaling; and the first transmitter 1602 sends a first signal.

In Embodiment 16, the first signaling comprises a first domain; the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

As one embodiment, an indication of the first domain in the first signaling depends on the first bit group in the first signaling.

As one embodiment, the first receiver 1601 receives a first information block, the first information block is used for determining M first-type indexes and M power control parameter groups, and M is a positive integer greater than 1, wherein the M first-type indexes and the M power control parameter groups are in one-to-one correspondence; a first index is one first-type index of the M first-type indexes, and the first power control parameter group is a power control parameter group corresponding to the first index among the M power control parameter groups; and the first domain in the first signaling and the first bit group in the first signaling are used for determining the first index.

As one embodiment, the first receiver 1601 receives a second information block, the second information block is used for determining N first-type indexes, a first power control parameter group set, and a second power control parameter group set; N being a positive integer greater than 1, and the first power control parameter group set and the second power control parameter group set respectively comprising at least one power control parameter group, wherein any power control parameter group in the first power control parameter group set corresponds to one first-type index of the N first-type indexes, and any power control parameter group in the second power control parameter group set corresponds to one first-type index of the N first-type indexes; a second index is one first-type index of the N first-type indexes, and a value of the second index is equal to a value of the first domain in the first signaling; the first power control parameter group is a power control parameter group corresponding to the second index in a target power control parameter group set, and the target power control parameter group set is the first power control parameter group set or the second power control parameter group set; and whether the target power control parameter group set is the first power control parameter group set or the second power control parameter group set depends on the first bit group in the first signaling.

As one embodiment, when and only when the first condition is satisfied, the first power control parameter group depends on the first bit group in the first signaling.

As one embodiment, the first receiver 1601 receives a third information block, the third information block is used for determining a first time domain resource, and the first time domain resource comprises at least one symbol, wherein the first condition comprises: a time domain resource in which the first signal is allocated is orthogonal to the first time domain resource.

As one embodiment, the first receiver 1601 receives a fourth information block.

As one embodiment, the first receiver 1601 receives a fifth information block.

As one embodiment, the first receiver 1601 receives a sixth information block.

As one embodiment, the first node is user equipment.

As one embodiment, the first node is a relay node device.

As one embodiment, the first bit group in the first signaling indicates the number of codewords carried by the first signal.

As one embodiment, the first bit group comprises a first bit subgroup and a second bit subgroup, the first bit subgroup and the second bit subgroup respectively comprise at least one DCI field in the first signaling; the first bit subgroup comprises a DCI field modulation and coding scheme and a DCI field redundancy version for TB 1 in the first signaling, and the second bit subgroup comprises a DCI field modulation and coding scheme and a DCI field redundancy version for TB 2 in the first signaling; and the position of the first bit subgroup in the first signaling is before the second bit subgroup.

As one embodiment, a first SRS resource group comprises at least one SRS resource; the first SRS resource group is a subset of the first SRS resource group, a first SRS resource group comprises a plurality of SRS resources, and each SRS resource in the first SRS resource group comprises one SRS port; and a higher layer parameter "usage" of the first SRS resource set is set as "nonCodebook".

As one embodiment, the first receiver 1601 comprises at least one of {the antenna 452, the receiving device 454, the receiving processor 456, the multi-antenna receiving processor 458, the controller/processor 459, the memory 460, and data source 467} in Embodiment 4.

As one embodiment, the first transmitter 1602 comprises at least one of {the antenna 452, the transmitting device 454, the transmitting processor 468, the multi-antenna transmitting processor 457, the controller/processor 459, the memory 460, and the data source 467} in Embodiment 4.

## Embodiment 17

Embodiment 17 illustrates a structural block diagram of a processing device used in a second node according to one embodiment of the present application, as shown in FIG. 17. In FIG. 17, the processing device 1700 in the second node comprises a second transmitter 1701 and a second receiver 1702.

In Embodiment 17, the second transmitter 1701 sends first signaling; and the second receiver 1702 receives a first signal.

In Embodiment 17, the first signaling comprises a first domain; the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

As one embodiment, an indication of the first domain in the first signaling depends on the first bit group in the first signaling.

As one embodiment, the second transmitter 1701 sends a first information block, the first information block is used for determining M first-type indexes and M power control parameter groups, and M is a positive integer greater than 1; wherein the M first-type indexes and the M power control parameter groups are in one-to-one correspondence; a first index is one first-type index of the M first-type indexes, and the first power control parameter group is a power control parameter group corresponding to the first index among the M power control parameter groups; and the first domain in the first signaling and the first bit group in the first signaling are used for determining the first index.

As one embodiment, the second transmitter 1701 sends a second information block, and the second information block is used for determining N first-type indexes, a first power control parameter group set, and a second power control parameter group set; N being a positive integer greater than 1, and the first power control parameter group set and the second power control parameter group set respectively comprising at least one power control parameter group, wherein any power control parameter group in the first power control parameter group set corresponds to one first-type index of the N first-type indexes, and any power control parameter group in the second power control parameter group set corresponds to one first-type index of the N first-type indexes; a second index is one first-type index of the N first-type indexes, and a value of the second index is equal to a value of the first domain in the first signaling; the first power control parameter group is a power control parameter group corresponding to the second index in a target power control parameter group set, and the target power control parameter group set is the first power control parameter group set or the second power control parameter group set; and whether the target power control parameter group set is the first power control parameter group set or the second power control parameter group set depends on the first bit group in the first signaling.

As one embodiment, when and only when the first condition is satisfied, the first power control parameter group depends on the first bit group in the first signaling.

As one embodiment, the second transmitter 1701 sends a third information block, the third information block is used for determining a first time domain resource, and the first time domain resource comprises at least one symbol; wherein the first condition comprises: a time domain resource in which the first signal is allocated is orthogonal to the first time domain resource.

As one embodiment, the second transmitter 1701 sends a fourth information block.

As one embodiment, the second transmitter 1701 sends a fifth information block.

As one embodiment, the second transmitter 1701 sends a sixth information block.

As one embodiment, the second node is a base station device.

As one embodiment, the second node is user equipment.

As one embodiment, the second node is a relay node device.

As one embodiment, the first bit group in the first signaling indicates the number of codewords carried by the first signal.

As one embodiment, the first bit group comprises a first bit subgroup and a second bit subgroup, the first bit subgroup and the second bit subgroup respectively comprise at least one DCI field in the first signaling; the first bit subgroup comprises a DCI field modulation and coding scheme and a DCI field redundancy version for TB 1 in the first signaling, and the second bit subgroup comprises a DCI field modulation and coding scheme and a DCI field redundancy version for TB 2 in the first signaling; and the position of the first bit subgroup in the first signaling is before the second bit subgroup.

As one embodiment, a first SRS resource group comprises at least one SRS resource; the first SRS resource group is a subset of the first SRS resource group, a first SRS resource group comprises a plurality of SRS resources, and each SRS resource in the first SRS resource group comprises one SRS port; and a higher layer parameter "usage" of the first SRS resource set is set as "nonCodebook".

As one embodiment, the second transmitter 1701 comprises at least one of {the antenna 420, the transmitting device 418, the transmitting processor 416, the multi-antenna transmitting processor 471, the controller/processor 475, and the memory 476} in Embodiment 4.

As one embodiment, the second receiver 1702 comprises at least one of {the antenna 420, the receiving device 418, the receiving processor 470, the multi-antenna transmitting processor 471, the controller/processor 475, and the memory 476} in Embodiment 4.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or parts of the steps in the above-mentioned embodiments can also be implemented by using one or more integrated circuits. Correspondingly, each module unit in the above-mentioned embodiments can be implemented in the form of hardware or in the form of a software function module. The present application is not limited to any specific form of combinations of software and hardware. The user equipment, the terminal and the UE in the present application include but are not limited to a drone, a communication module on the drone, a remote-controlled airplane, an aircraft, a small airplane, a mobile phone, a tablet computer, a notebook, a vehicle-mounted communication device, a transportation vehicle, a vehicle, an RSU, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer and other wireless communication devices. The base station or the system device in the present application includes but is not limited to a macro cell base station, a micro cell base station, a small cell base stations, a femtocell, a relay base station, an eNB, a gNB, a TRP (Transmitter Receiver Point), a GNSS, a relay satellite, a satellite base station, an aerial base station, an RSU (Road Side Unit), a drone, a test device, for example, a wireless communication device such as a transceiver or signaling testers that simulate some functions of the base station.

Those skilled in the art should understand that the present invention can be implemented in other specified forms without departing from the core or basic features thereof. Therefore, the embodiments currently disclosed should be regarded to be descriptive rather than restrictive in any way. The scope of the invention is determined by the appended claims rather than the preceding description, and all changes within their equivalent meanings and areas are deemed to be included therein.

**Claims**

1.  A first node device for wireless communication, comprising:

    a first receiver for receiving first signaling, the first signaling comprising a first domain; and
    a first transmitter for sending a first signal,
    wherein the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

2.  The first node device according to claim 1, wherein an indication of the first domain in the first signaling depends on the first bit group in the first signaling.

3.  The first node device according to claim 1 or 2, wherein the first receiver receives a first information block, the first information block is used for determining M first-type indexes and M power control parameter groups, and M is a positive integer greater than 1, wherein the M first-type indexes and the M power control parameter groups are in one-to-one correspondence; a first index is one first-type index of the M first-type indexes, and the first power control parameter group is a power control parameter group corresponding to the first index among the M power control parameter groups; and the first domain in the first signaling and the first bit group in the first signaling are used for determining the first index.

4.  The first node device according to any one of claims 1 to 3, wherein the first receiver receives a second information block, the second information block is used for determining N first-type indexes, a first power control parameter group set, and a second power control parameter group set, N is a positive integer greater than 1, and the first power control parameter group set and the second power control parameter group set respectively comprise at least one power control parameter group, wherein any power control parameter group in the first power control parameter group set corresponds to one first-type index of the N first-type indexes, and any power control parameter group in the second power control parameter group set corresponds to one first-type index of the N first-type indexes; a second index is one first-type index of the N first-type indexes, and a value of the second index is equal to a value of the first domain in the first signaling; the first power control parameter group is a power control parameter group corresponding to the second index in a target power control parameter group set, and the target power control parameter group set is the first power control parameter group set or the second power control parameter group set; and whether the target power control parameter group set is the first power control parameter group set or the second power control parameter group set depends on the first bit group in the first signaling.

5.  The first node device according to any one of claims 1 to 4, wherein when and only when a first condition is satisfied, the first power control parameter group depends on the first bit group in the first signaling.

6.  The first node device according to claim 5, wherein the first receiver receives a third information block, the third information block is used for determining a first time domain resource, and the first time domain resource comprises at least one symbol, wherein the first condition comprises: a time domain resource in which the first signal is allocated is orthogonal to the first time domain resource.

7. A second node device for wireless communication, comprising:

a second transmitter for sending first signaling, the first signaling comprising a first domain; and
a second receiver for receiving a first signal,
wherein the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

8. The second node device according to claim 7, wherein an indication of the first domain in the first signaling depends on the first bit group in the first signaling.

9. The second node device according to claim 7 or 8, wherein the second transmitter sends a first information block, the first information block is used for determining M first-type indexes and M power control parameter groups, and M is a positive integer greater than 1, wherein the M first-type indexes and the M power control parameter groups are in one-to-one correspondence; a first index is one first-type index of the M first-type indexes, and the first power control parameter group is a power control parameter group corresponding to the first index among the M power control parameter groups; and the first domain in the first signaling and the first bit group in the first signaling are used for determining the first index.

10. The second node device according to any one of claims 7 to 9, wherein the second transmitter sends a second information block, the second information block is used for determining N first-type indexes, a first power control parameter group set, and a second power control parameter group set, N is a positive integer greater than 1, and the first power control parameter group set and the second power control parameter group set respectively comprise at least one power control parameter group, wherein any power control parameter group in the first power control parameter group set corresponds to one first-type index of the N first-type indexes, and any power control parameter group in the second power control parameter group set corresponds to one first-type index of the N first-type indexes; a second index is one first-type index of the N first-type indexes, and a value of the second index is equal to a value of the first domain in the first signaling; the first power control parameter group is a power control parameter group corresponding to the second index in a target power control parameter group set, and the target power control parameter group set is the first power control parameter group set or the second power control parameter group set; and whether the target power control parameter group set is the first power control parameter group set or the second power control parameter group set depends on the first bit group in the first signaling.

11. The second node device according to any one of claims 7 to 10, wherein when and only when a first condition is satisfied, the first power control parameter group depends on the first bit group in the first signaling.

12. The second node device according to claim 11, wherein the second transmitter sends a third information block, the third information block is used for determining a first time domain resource, and the first time domain resource comprises at least one symbol, wherein the first condition comprises: a time domain resource in which the first signal is allocated is orthogonal to the first time domain resource.

13. A method used in a first node for wireless communication, comprising:

receiving first signaling, the first signaling comprising a first domain; and
sending a first signal,
wherein the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

14. The method according to claim 13, wherein an indication of the first domain in the first signaling depends on the first bit group in the first signaling.

15. The method according to claim 13 or 14, comprising:

receiving a first information block, the first information block being used for determining M first-type indexes and M power control parameter groups, and M being a positive integer greater than 1,

wherein the M first-type indexes and the M power control parameter groups are in one-to-one correspondence; a first index is one first-type index of the M first-type indexes, and the first power control parameter group is a power control parameter group corresponding to the first index among the M power control parameter groups; and the first domain in the first signaling and the first bit group in the first signaling are used for determining the first index.

16. The method according to any one of claims 13 to 15, comprising:

receiving a second information block, the second information block being used for determining N first-type indexes, a first power control parameter group set, and a second power control parameter group set, N being a positive integer greater than 1, and the first power control parameter group set and the second power control parameter group set respectively comprising at least one power control parameter group,

wherein any power control parameter group in the first power control parameter group set corresponds to one first-type index of the N first-type indexes, and any power control parameter group in the second power control parameter group set corresponds to one first-type index of the N first-type indexes; a second index is one first-type index of the N first-type indexes, and a value of the second index is equal to a value of the first domain in the first signaling; the first power control parameter group is a power control parameter group corresponding to the second index in a target power control parameter group set, and the target power control parameter group set is the first power control parameter group set or the second power control parameter group set; and whether the target power control parameter group set is the first power control parameter group set or the second power control parameter group set depends on the first bit group in the first signaling.

17. The method according to any one of claims 13 to 16, wherein when and only when a first condition is satisfied, the first power control parameter group depends on the first bit group in the first signaling.

18. The method according to claim 17, comprising:

receiving a third information block, the third information block being used for determining a first time domain resource, and the first time domain resource comprising at least one symbol,

wherein the first condition comprises: a time domain resource in which the first signal is allocated is orthogonal to the first time domain resource.

19. A method used in a second node for wireless communication, comprising:

sending first signaling, the first signaling comprising a first domain; and
receiving a first signal,

wherein the first domain in the first signaling is used for determining a first SRS resource group, and the first SRS resource group is used for determining an antenna port that sends the first signal; a first power control parameter group is used for determining the sending power of the first signal; the first signal carries at least one codeword; the first signaling comprises a first bit group, and the first bit group in the first signaling is used for determining an MCS for the first signal; and the first power control parameter group depends on the first domain in the first signaling and the first bit group in the first signaling.

20. The method according to claim 19, wherein an indication of the first domain in the first signaling depends on the first bit group in the first signaling.

21. The method according to claim 19 or 20, comprising:

sending a first information block, the first information block being used for determining M first-type indexes and M power control parameter groups, and M being a positive integer greater than 1,

wherein the M first-type indexes and the M power control parameter groups are in one-to-one correspondence; a first index is one first-type index of the M first-type indexes, and the first power control parameter group is a power control parameter group corresponding to the first index among the M power control parameter groups; and the first domain in the first signaling and the first bit group in the first signaling are used for determining the first index.

22. The method according to any one of claims 19 to 21, comprising:

sending a second information block, the second information block being used for determining N first-type indexes, a first power control parameter group set, and a second power control parameter group set, N being a positive integer greater than 1, and the first power control parameter group set and the second power control parameter group set respectively comprising at least one power control parameter group,
wherein any power control parameter group in the first power control parameter group set corresponds to one first-type index of the N first-type indexes, and any power control parameter group in the second power control parameter group set corresponds to one first-type index of the N first-type indexes; a second index is one first-type index of the N first-type indexes, and a value of the second index is equal to a value of the first domain in the first signaling; the first power control parameter group is a power control parameter group corresponding to the second index in a target power control parameter group set, and the target power control parameter group set is the first power control parameter group set or the second power control parameter group set; and whether the target power control parameter group set is the first power control parameter group set or the second power control parameter group set depends on the first bit group in the first signaling.

23. The method according to any one of claims 19 to 22, wherein when and only when a first condition is satisfied, the first power control parameter group depends on the first bit group in the first signaling.

24. The method according to claim 23, comprising:

sending a third information block, the third information block being used for determining a first time domain resource, and the first time domain resource comprising at least one symbol,
wherein the first condition comprises: a time domain resource in which the first signal is allocated is orthogonal to the first time domain resource.

100

First node

101
Receive first signaling

102
Send a first signal

FIG. 1

5GS/EPS 200

220
HSS/UDM

NG-RAN
202

211
MME/AMF/
SMF

214
Other
MME/AMF/
SMF

201
UE

203
NR Node B

241
UE

204
Other NR
nodes B

212
S-GW/UPF

213
P-GW/UPF

230
Internet service

5GC/EPC
210

FIG. 2

Control plane
300

L3

RRC  306

305

L2

PDCP  304

RLC  303

MAC  302

L1

PHY  301

User plane
350

L2

SDAP  356

355

PDCP  354

RLC  353

MAC  352

L1

PHY  351

FIG. 3

FIG. 4

FIG. 5

First bit group

| First bit subgroup | Second bit subgroup |

FIG. 6

A first power control parameter group →(Is used for determining)→ First reference power →(Is used for determining)→ Sending power of a first signal

FIG. 7

Whether a target SRI group pool is a first candidate SRI group pool or a second candidate SRI group pool →(Depend on)→ A first bit group in first signaling

FIG. 8

A first power control parameter group = A power control parameter group corresponding to a fourth index among K power control parameter groups

Whether the K power control parameter groups are N1 power control parameter groups or N2 power control parameter groups →(Depend on)→ A first bit group in first signaling

FIG. 9

A first power control parameter group = One power control parameter group corresponding to a third index among N3 power control parameter groups

A first domain in first signaling and a first bit group in the first signaling →(Are used for determining)→ A third index

FIG. 10

A first power control parameter group = A power control parameter group corresponding to a first index among M power control parameter groups

A first domain in first signaling and a first bit group in the first signaling →(Are used for determining)→ First index

FIG. 11

A first power control parameter group = A power control parameter group corresponding to a second index in a target power control parameter group set

Whether the target power control parameter group set is a first power control parameter group set or a second power control parameter group set →(Depend on)→ A first bit group in first signaling

FIG. 12

Second information block

Information sub-block #0 ⋯ Information sub-block #(N-1)

FIG. 13

When and only when a second condition is satisfied, a first power control parameter group →(Depend on)→ A first bit group in first signaling

FIG. 14

Third information block $\xrightarrow{\text{Is used for determining}}$ First time domain resource

FIG. 15

1600

First receiver
1601

First node

First transmitter
1602

FIG. 16

1700

Second transmitter
1701

Second node

Second receiver
1702

FIG. 17

## INTERNATIONAL SEARCH REPORT

| International application No. |
|---|
| **PCT/CN2023/129073** |

| A. | CLASSIFICATION OF SUBJECT MATTER |
|---|---|

H04W 52/14(2009.01)i

According to International Patent Classification (IPC) or to both national classification and IPC

| B. | FIELDS SEARCHED |
|---|---|

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT; ENTXT; ENTXTC; CNKI; 3GPP; VEN; DWPI: 信令, 控制信息, SRS, 资源, 组, 域, 天线端口, 功控, 功率, 控制, 参数, 码字, 比特, MCS, 调制编码, signaling, control information, resource, group, domain, field, antenna port, power, control, parameter, codeword, bit, modulation coding

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 108155925 A (SHANGHAI LANGBO COMMUNICATION TECHNOLOGY CO., LTD.) 12 June 2018 (2018-06-12) description, paragraphs [0194]-[0326] | 1-24 |
| Y | CN 106233649 A (QUALCOMM INC.) 14 December 2016 (2016-12-14) description, paragraphs [0101]-[0113] | 1-24 |
| A | CN 108924920 A (ZTE CORP.) 30 November 2018 (2018-11-30) entire document | 1-24 |
| A | US 2022322239 A1 (DATANG MOBILE COMMUNICATIONS EQUIPMENT CO., LTD.) 06 October 2022 (2022-10-06) entire document | 1-24 |
| A | WO 2017107054 A1 (INTEL IP CORP. et al.) 29 June 2017 (2017-06-29) entire document | 1-24 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 January 2024** | **24 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/129073**

| Patent document cited in search report | | | Publication date (day/month/year) | Patent family member(s) | | | Publication date (day/month/year) |
|---|---|---|---|---|---|---|---|
| CN | 108155925 | A | 12 June 2018 | US | 2022394623 | A1 | 08 December 2022 |
| | | | | US | 2019289555 | A1 | 19 September 2019 |
| | | | | US | 2020305086 | A1 | 24 September 2020 |
| | | | | WO | 2018103444 | A1 | 14 June 2018 |
| | | | | CN | 109150251 | A | 04 January 2019 |
| | | | | CN | 109361437 | A | 19 February 2019 |
| CN | 106233649 | A | 14 December 2016 | JP | 2019106716 | A | 27 June 2019 |
| | | | | ES | 2885428 | T3 | 13 December 2021 |
| | | | | US | 2015312071 | A1 | 29 October 2015 |
| | | | | BR | 112016024839 | A2 | 15 August 2017 |
| | | | | KR | 20160147756 | A | 23 December 2016 |
| | | | | WO | 2015164251 | A1 | 29 October 2015 |
| | | | | JP | 2017514397 | A | 01 June 2017 |
| | | | | KR | 20200023527 | A | 04 March 2020 |
| | | | | MX | 2016013402 | A | 15 February 2017 |
| | | | | US | 2018375697 | A1 | 27 December 2018 |
| | | | | EP | 3134988 | A1 | 01 March 2017 |
| | | | | CN | 111245565 | A | 05 June 2020 |
| CN | 108924920 | A | 30 November 2018 | None | | | |
| US | 2022322239 | A1 | 06 October 2022 | KR | 20220045027 | A | 12 April 2022 |
| | | | | WO | 2021031949 | A1 | 25 February 2021 |
| | | | | EP | 4017142 | A1 | 22 June 2022 |
| | | | | CN | 112398622 | A | 23 February 2021 |
| WO | 2017107054 | A1 | 29 June 2017 | None | | | |

Form PCT/ISA/210 (patent family annex) (July 2022)